# EUROPEAN PATENT APPLICATION

(11) **EP 4 819 730 A1**
(43) Date of publication of application: **07.10.2026**
(21) Application number: 24896999.0
(22) Date of filing: 20.08.2024
(51) Int. Cl.: H04W 72/1268, H04W 72/232, H04W 72/0446

(54) **TERMINAL, BASE STATION, AND COMMUNICATION METHOD**

(30) Priority: 29.11.2023 JP 2023201637
(71) Applicant: Panasonic Intellectual Property Corporation of America, Torrance, CA 90504 (US)
(72) Inventor: YAMAMOTO, Tetsuya, Kadoma-shi, Osaka 571-8501 (JP); SUZUKI, Hidetoshi, Kadoma-shi, Osaka 571-0057 (JP); TRAN, Xuan Tuong, Singapore 469332 (SG); NUNOME, Tomoya, Kadoma-shi, Osaka 571-0057 (JP); HORIUCHI, Ayako, Kadoma-shi, Osaka 571-0057 (JP)
(74) Representative: Grünecker Patent- und Rechtsanwälte PartG mbB
(86) International application number: PCT/JP2024/029475
(87) International publication number: WO 2025/115307

(57) **Abstract**

This terminal is provided with: a reception circuit that receives downlink control information including information scrambled by a terminal-specific identifier and serving to schedule an uplink signal regardless of terminal-specific configurations; and a transmission circuit that repeatedly transmits an uplink signal on the basis of information regarding repeated transmission of an uplink signal, the information being identified on the basis of the downlink control information.

## Description

### Technical Field

The present disclosure relates to a terminal, a base station, and a communication method.

### Background Art

In recent years, against the background of the expansion and diversification of radio services, a dramatic growth of Internet of Things (IoT) is expected. The application of mobile communication is expanding to all fields, including automobiles, homes, home electric appliances, and industrial equipment, in addition to information terminals such as smartphones. In order to support the diversification of services, significant improvements in the performance and functionality of mobile communication systems are required for various requirements such as an increase in the number of connected devices and low latency, in addition to an increase in system capacity. The 5th generation mobile communication system (5G) has features such as enhanced Mobile Broadband (eMBB), massive Machine Type Communication (mMTC), and Ultra Reliable and Low Latency Communication (URLLC), and flexibly provides radio communication in response to a wide variety of needs.

In 3rd Generation Partnership Project (3GPP), which is an international standardization organization, the specification of New Radio (NR) is being advanced as one of the 5G radio interfaces.

### Citation List

### Non-Patent Literature (hereinafter referred to as "NPL")

NPL 1
   3GPP TS38.104 V15.19.0, "NR Base Station (BS) radio transmission and reception (Release 15)," June 2023.
NPL 2
   RP-202928, "New WID on NR coverage enhancements," China Telecom, December 2020.
NPL 3
   RP-220937, "Revised WID on Further NR coverage enhancements," China Telecom, March 2022.
NPL 4
   3GPP TS38.211 V17.6.0, "NR Physical channels and modulation (Release 17)," September 2023.
NPL 5
   3GPP TS38.212 V17.6.0, "NR Multiplexing and channel coding (Release 17)," September 2023.
NPL 6
   3GPP TS38.213 V17.6.0, "NR Physical layer procedures for control (Release 17)," September 2023.
NPL 7
   3GPP TS38.214 V17.6.0, "NR Physical layer procedures for data (Release 17)," September 2023.
NPL 8
   RP-232626, "Moderator's summary for REL-19 RAN1 additional topics," RAN1 Chair, (Samsung), September 2023.
NPL 9
   3GPP TS38.331 V17.6.0, "NR Radio Resource Control (RRC) protocol specification Release 17)," September 2023.

### Summary of Invention

There is, however, room for consideration on a method for transmitting a signal in the uplink.

A non-limiting embodiment of the present disclosure facilitates providing a terminal, a base station, and a communication method each capable of appropriately transmitting a signal in the uplink.

A terminal according to an embodiment of the present disclosure includes: reception circuitry, which, in operation, receives downlink control information scheduling an uplink signal independently of a terminal-specific configuration, the downlink control information including information scrambled by a terminal-specific identifier; and transmission circuitry, which, in operation, performs repetition transmission of the uplink signal based on information related to the repetition transmission of the uplink signal, the information related to the repetition transmission being identified based on the downlink control information.

It should be noted that general or specific embodiments may be implemented as a system, a method, an integrated circuit, a computer program, a storage medium, or any selective combination thereof.

According to an embodiment of the present disclosure, a signal can be appropriately transmitted in the uplink.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### Brief Description of Drawings

[FIG. 1] FIG. 1 is a block diagram illustrating a configuration example of a part of a base station;
[FIG. 2] FIG. 2 is a block diagram illustrating a configuration example of a part of a terminal;
[FIG. 3] FIG. 3 is a flowchart illustrating an operation example of the terminal;
[FIG. 4] FIG. 4 is a diagram illustrating an example of Downlink Control Information (DCI) to be blind-decoded by the terminal;
[FIG. 5] FIG. 5 is a flowchart illustrating an operation example of the terminal;
[FIG. 6] FIG. 6 is a diagram illustrating an example of DCI to be blind-decoded by the terminal;
[FIG. 7] FIG. 7 is a diagram illustrating an example of a function applied to a Physical Uplink Shared Channel (PUSCH);
[FIG. 8] FIG. 8 is a block diagram illustrating a configuration example of the base station;
[FIG. 9] FIG. 9 is a block diagram illustrating a configuration example of the terminal;
[FIG. 10] FIG. 10 is a diagram illustrating an exemplary architecture of a 3GPP NR system;
[FIG. 11] FIG. 11 is a schematic diagram illustrating functional split between NG-RAN and 5GC; and
[FIG. 12] FIG. 12 is a sequence diagram of Radio Resource Control (RRC) connection setup/reconfiguration procedure;
[FIG. 13] FIG. 13 schematically illustrates usage scenarios of enhanced Mobile BroadBand (eMBB), massive Machine Type Communications (mMTC), and Ultra Reliable and Low Latency Communications (URLLC); and
[FIG. 14] FIG. 14 is a block diagram illustrating an exemplary 5G system architecture for a non-roaming scenario.

### Description of Embodiments

Hereinafter, embodiments of the present disclosure will be described in detail with reference to the accompanying drawings.

In NR, millimeter wave bands such as the 28 GHz or 39 GHz bands (also referred to as, e.g., Frequency Range 2 (FR2)), which can secure a wide bandwidth, may be utilized in addition to frequency bands below 6 GHz, mainly in the 700 MHz to 3.5 GHz range (also referred to as, e.g., Frequency Range 1 (FR1)), which have been used for cellular communications (see, e.g., NPL 1). Furthermore, for example, in FR1, frequency bands higher than those used in Long Term Evolution (LTE) or 3G (3rd Generation mobile communication systems), such as the 3.5 GHz band, may be used.

The higher the frequency band is, the greater the radio wave propagation loss, and the more susceptible the received quality of radio waves is to degradation. For this reason, in NR, when frequency bands higher than those used in LTE or 3G are used, for example, it is expected that a communication area (or coverage) comparable to that of radio access technologies (RAT) such as LTE or 3G is secured, in other words, that appropriate communication quality is ensured. For example, in 3GPP Release 17 (e.g., referred to as "Rel. 17") and Release 18 (e.g., referred to as "Rel.18"), methods for improving coverage in NR have been studied (see, e.g., NPLs 2 and 3).

In NR, a terminal (e.g., also referred to as user equipment (UE)) transmits and receives data, for example, in accordance with resource allocation indicated by a layer 1 control signal (e.g., downlink control information (DCI)) on a downlink control channel (e.g., a physical downlink control channel (PDCCH)) from a base station (e.g., also referred to as gNB) or a radio resource control (RRC) which is a layer 3 (e.g., see NPLs 4 to 7).

In NR, repetition transmission (Repetition) can be applied as one of the uplink (UL) coverage enhancement techniques (see, e.g., NPL 6 or 7). In NR up to Release 18, channels to which repetition can be applied are: an uplink data channel (e.g., Physical Uplink Shared Channel (PUSCH)) scheduled by DCI format 0-1 or DCI format 0-2 (e.g., PUSCH scheduled after parameters are configured by a pusch-Config information element (IE), which is terminal-specific RRC); Msg.3 PUSCH (e.g., PUSCH scheduled by a Random Access Response (RAR)); an uplink control channel (e.g., PUCCH: Physical Uplink Control Channel); and a random access channel (e.g., Physical Random Access Channel (PRACH)).

In NR, the repetition is not supported for a PUSCH scheduled by DCI format 0-0, which is one of the DCI formats with a Cyclic Redundancy Check (CRC) parity bit scrambled by a Cell-Radio Network Temporary Identifier (C-RNTI) (e.g., example of terminal-specific identifier).

For example, a terminal may have a PUSCH scheduled by DCI format 0-0 with a CRC scrambled by a C-RNTI, after transmitting Msg.3 PUSCH and before completion of a UE-specific PUSCH configuration (e.g., Dedicated PUSCH configuration).

Here, a PUSCH that is scheduled by DCI format 0-0 with a CRC scrambled by a C-RNTI after a terminal transmits Msg.3 PUSCH and before completion of the UE-specific (terminal-specific) PUSCH configuration is sometimes referred to as "Msg.5 PUSCH."

For example, Msg.5 PUSCH may be a PUSCH containing a message (e.g., RRCSetupComplete) by which a terminal that has received a message containing configurations for the terminal (e.g., RRC Setup) indicates, to a base station, the completion of application of the configurations contained in the RRC Setup.

For example, the payload size of the PUSCH containing RRCSetupComplete may be larger than the payload size of Msg.3 PUSCH. In this case, at initial access, a PUSCH to which repetition is not applied, such as a PUSCH scheduled by DCI format 0-0 with a CRC scrambled by a C-RNTI, may become a bottleneck for coverage.

Therefore, applying repetition to a PUSCH scheduled by DCI format 0-0 with a CRC scrambled by a C-RNTI is being studied (see, e.g., NPL 8). However, there is room for study regarding a control method for a terminal to transmit (e.g., repetition transmission) a PUSCH scheduled by DCI format 0-0 with a CRC scrambled by a C-RNTI.

For example, as described above, a PUSCH scheduled by DCI format 0-0 with a CRC scrambled by a C-RNTI may be used for transmission of Msg.5 PUSCH (e.g., PUSCH containing RRCSetupComplete). Therefore, control that takes into account the transmission of Msg.5 PUSCH (e.g., PUSCH containing RRCSetupComplete) is expected. For example, in the transmission of Msg.5 PUSCH, cases where a UE-specific RRC configuration (e.g., dedicated RRC configuration) is available and cases where a UE-specific RRC configuration is not available are assumed. For this reason, it is expected that, even in cases where a UE-specific RRC configuration is not available, a terminal can receive DCI format 0-0 with a CRC scrambled by a C-RNTI and transmit a PUSCH.

In NR, when a Type3-PDCCH Common Search Space (CSS) Set (e.g., configured with SearchSpaceType = common in UE-specific PDCCH-Config) and a UE-specific Search Space (USS) Set are not provided to a terminal, that is, when a UE-specific PDCCH reception configuration is not available at the terminal, the terminal monitors (or performs blind decoding of) PDCCH candidates for DCI format 0-0 with a CRC scrambled by a C-RNTI within a Type1-PDCCH CSS Set. Therefore, it is expected that repetition is applied to a PUSCH scheduled by a DCI (e.g., DCI format 0-0 with a CRC scrambled by a C-RNTI) decoded by monitoring PDCCH candidates within the Type1-PDCCH CSS Set.

Furthermore, DCI format 0-0 with a CRC scrambled by a C-RNTI does not have a function of indicating information related to PUSCH repetition (e.g., the number of repetitions). Therefore, there is room for study regarding a method for indicating information related to repetition for a PUSCH scheduled by DCI format 0-0 with a CRC scrambled by a C-RNTI.

In a non-limiting example of the present disclosure, a method for efficiently applying a repetition function, taking into account the transmission of Msg.5 PUSCH (e.g., PUSCH containing RRCSetupComplete), to a PUSCH scheduled by DCI format 0-0 with a CRC scrambled by a C-RNTI will be described.

Hereinafter, non-limiting embodiments of the present disclosure will be described.

### [Overview of Communication System]

A communication system according to each embodiment of the present disclosure includes, for example, at least one base station and at least one terminal.

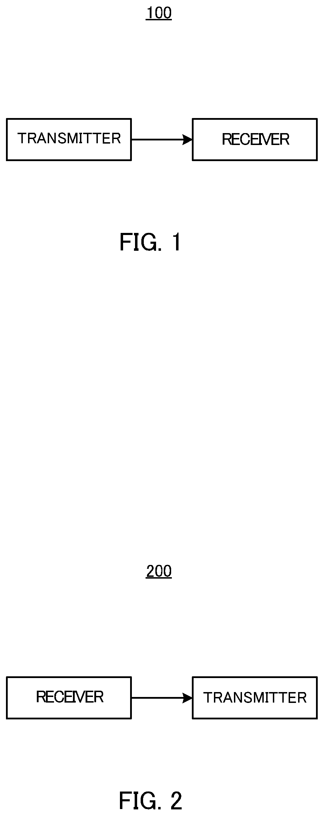

FIG. 1 is a block diagram illustrating a configuration example of a part of base station 100 according to an embodiment of the present disclosure, and FIG. 2 is a block diagram illustrating a configuration example of a part of terminal 200 according to an embodiment of the present disclosure.

In base station 100 illustrated in FIG. 1, a transmitter (e.g., corresponding to transmission circuitry) transmits downlink control information (e.g., DCI format 0-0) including information (e.g., CRC) scrambled by a UE-specific identifier (e.g., C-RNTI) and scheduling an uplink signal independently of a UE-specific configuration (e.g., dedicated RRC configuration). A receiver (e.g., corresponding to reception circuitry) receives repetition transmission of the uplink signal based on information (e.g., information related to repetition) related to the repetition transmission of the uplink signal specified based on the downlink control information.

In terminal 200 illustrated in FIG. 2, a receiver (e.g., corresponding to reception circuitry) receives downlink control information (e.g., DCI format 0-0) including information (e.g., CRC) scrambled by a UE-specific identifier (e.g., C-RNTI) and scheduling an uplink signal independently of a UE-specific configuration (e.g., dedicated RRC configuration). A transmitter (e.g., corresponding to transmission circuitry) performs repetition transmission of the uplink signal based on information (e.g., information related to repetition) related to the repetition transmission of the uplink signal identified based on the downlink control information.

### (Embodiment 1)

In the present embodiment, application of repetition to PUSCH transmission is assumed for: Msg.5 PUSCH, a PUSCH including RRCSetupComplete, or a PUSCH scheduled by DCI format 0-0 with a CRC scrambled by a C-RNTI after terminal 200 transmits Msg.3 PUSCH and before a UE-specific PUSCH configuration (e.g., dedicated PUSCH configuration) is completed.

Note that, in the present embodiment, the above PUSCH is collectively referred to as "Msg.5 PUSCH."

For example, terminal 200 that has requested Msg.5 PUSCH repetition, terminal 200 that has indicated, to a base station, its capability (capability) for Msg.5 PUSCH repetition, or terminal 200 that has Msg.5 PUSCH repetition capability is indicated with information related to PUSCH repetition (e.g., number of repetitions) via a part of information fields of DCI format 0-0 with a CRC scrambled by a C-RNTI (e.g., through reuse of a part of information fields).

For example, the following information fields of DCI format 0-0 with a CRC scrambled by a C-RNTI may be reused for indication of information related to PUSCH repetition.

### [Option 1: Modulation and Coding Scheme (MCS) field]

For example, of the 5 bits of the MCS field, X Most Significant Bits (MSBs) may be used to indicate information related to PUSCH repetition. In addition, of the 5 bits of the MCS field, 5-X Least Significant Bits (LSBs) may be used to indicate the MCS index.

In this case, the candidates for values of information related to PUSCH repetition that can be indicated via the MCS field, and of the MCS index, are 2^{X} and 2^{5-X}, respectively. These values may be pre-defined in the specification or may be configured for terminal 200 via System Information Block (SIB) or RRC.

Furthermore, for example, a table of up to 2⁵ rows, each containing an MCS index and information related to PUSCH repetition as columns, may be defined or configured via SIB or RRC. For example, the MCS index and information related to PUSCH repetition may be indicated by indicating an identifier (e.g., index) corresponding to each row of the table.

### [Option 2: Time Domain Resource Allocation (TDRA) field]

For example, of the 4 bits of the TDRA field, X MSBs may be used to indicate information related to PUSCH repetition (e.g., number of repetitions). In addition, of the 4 bits of the TDRA field, 4-X LSBs may be used to indicate the TDRA index.

In this case, the candidates for values of information related to PUSCH repetition that can be indicated via the TDRA field, and of the TDRA index, are 2^{X} and 2^{4-X}, respectively. These values may be pre-defined in the specification or may be configured for terminal 200 via SIB or RRC.

Furthermore, for example, a table of up to 2⁴ rows, each containing parameters related to TDRA (e.g., slot index, number of symbols) and information related to PUSCH repetition as columns, may be defined or configured via SIB or RRC. For example, the parameters related to TDRA and information related to PUSCH repetition may be indicated by indicating the index corresponding to each row of the table.

### [Option 3: Transmit Power Control (TPC) field]

Of the 2 bits of the TPC field (also referred to as, e.g., TPC command for scheduled PUSCH field), X MSBs may be used to indicate information related to PUSCH repetition (e.g., number of repetitions). In addition, of the 2 bits of the TPC field, 2-X LSBs may be used to indicate the TPC command.

In this case, the candidates for values of information related to PUSCH repetition that can be indicated via the TPC field, and of the TPC command, are 2^{X} and 2^{2-X}, respectively. These values may be pre-defined in the specification or may be configured for terminal 200 via SIB or RRC.

Furthermore, for example, a table of up to 2² rows, each containing a TPC command and information related to PUSCH repetition as columns, may be defined or configured via SIB or RRC. For example, the TPC command and information related to PUSCH repetition may be indicated by indicating the index corresponding to each row of the table.

### [Option 4: Frequency Domain Resource Allocation (FDRA) field]

Of the Y bits of the FDRA field, X MSBs may be used to indicate information related to PUSCH repetition (e.g., number of repetitions). In addition, of the Y bits of the FDRA field, Y-X LSBs may be used to indicate frequency domain resources.

In this case, the candidates for values of information related to PUSCH repetition that can be indicated via the FDRA field are 2^{X}, which may be pre-defined in the specification or may be configured for terminal 200 via SIB or RRC.

The number of bits Y of the FDRA field may be, for example,
[1] $\left⌈{log}_{2}\left({N}_{RB}^{UL , BWP}\left({N}_{RB}^{UL , BWP}+1\right)/2\right)\right⌉ bits ,$ where
[2] ${N}_{RB}^{UL , BWP}$ may be the number of resource blocks (RBs) of the initial BWP (BandWidth Part) (initial UL BWP) or the number of resource blocks of the active BWP.

### [Option 5: Redundancy Version (RV) field]

Of the 2 bits of the RV field, X MSBs may be used to indicate information related to PUSCH repetition (e.g., number of repetitions). In addition, of the 2 bits of the RV field, 2-X LSBs may be used to indicate the RV index.

In this case, the candidates for values of information related to PUSCH repetition that can be indicated via the RV field, and of the RV index, are 2^{X} and 2^{2-X}, respectively. These values may be pre-defined in the specification or may be configured for terminal 200 via SIB or RRC.

Furthermore, for example, a table of up to 2² rows, each containing an RV index and information related to PUSCH repetition as columns, may be defined or configured via SIB or RRC. For example, the RV index and information related to PUSCH repetition may be indicated by indicating the index corresponding to each row of the table.

### [Option 6: Hybrid Automatic Repeat Request (HARQ) process number field]

Of the 4 bits of the HARQ process number field, X MSBs may be used to indicate information related to PUSCH repetition (e.g., number of repetitions). In addition, of the 4 bits of the HARQ process number field, 4-X LSBs may be used to indicate the HARQ process number.

In this case, the candidates for values of information related to PUSCH repetition that can be indicated via the HARQ process number field, and of the HARQ process number, are 2^{X} and 2^{4-X}, respectively. These values may be pre-defined in the specification or may be configured for terminal 200 via SIB or RRC.

Furthermore, for example, a table of up to 2⁴ rows, each containing a HARQ process number and information related to PUSCH repetition as columns, may be defined or configured via SIB or RRC. For example, the HARQ process number and information related to PUSCH repetition may be indicated by indicating the index corresponding to each row of the table.

The above describes examples in which a part of the information fields of DCI format 0-0 with a CRC scrambled by a C-RNTI are reused to indicate information related to PUSCH repetition.

According to the present embodiment, when terminal 200 that has requested Msg.5 PUSCH repetition, terminal 200 that has indicated, to base station 100, its Msg.5 PUSCH repetition capability, or terminal 200 that has Msg.5 PUSCH repetition capability receives DCI format 0-0 with a CRC scrambled by a C-RNTI, terminal 200 can obtain information related to PUSCH repetition by reinterpreting a specific information field as an indication of information related to PUSCH repetition. Therefore, according to the present embodiment, terminal 200 can perform repetition transmission of the PUSCH scheduled by DCI format 0-0 with a CRC scrambled by a C-RNTI.

Note that the PUSCH to which the present embodiment is applicable is not limited to the above-described Msg.5 PUSCH, a PUSCH including RRCSetupComplete, or a PUSCH scheduled by DCI format 0-0 with a CRC scrambled by a C-RNTI after terminal 200 transmits Msg.3 PUSCH and before a UE-specific PUSCH configuration is completed. For example, the present embodiment is also applicable to a PUSCH scheduled by DCI format 0-0 with a CRC scrambled by a C-RNTI after the UE-specific PUSCH configuration has been completed.

Furthermore, in Options 1 to 6 described above, information related to PUSCH repetition is not limited to being assigned to the MSB or LSB of a specific field; the information may also be assigned to other areas of X bits. Furthermore, X bits may be any number of bits from 1 bit to all bits of the information field to which information related to PUSCH repetition is assigned.

Moreover, information related to PUSCH repetition may be assigned across multiple information fields. For example, information related to PUSCH repetition may be assigned to part or all of each of multiple information fields.

### [Operation example of terminal 200]

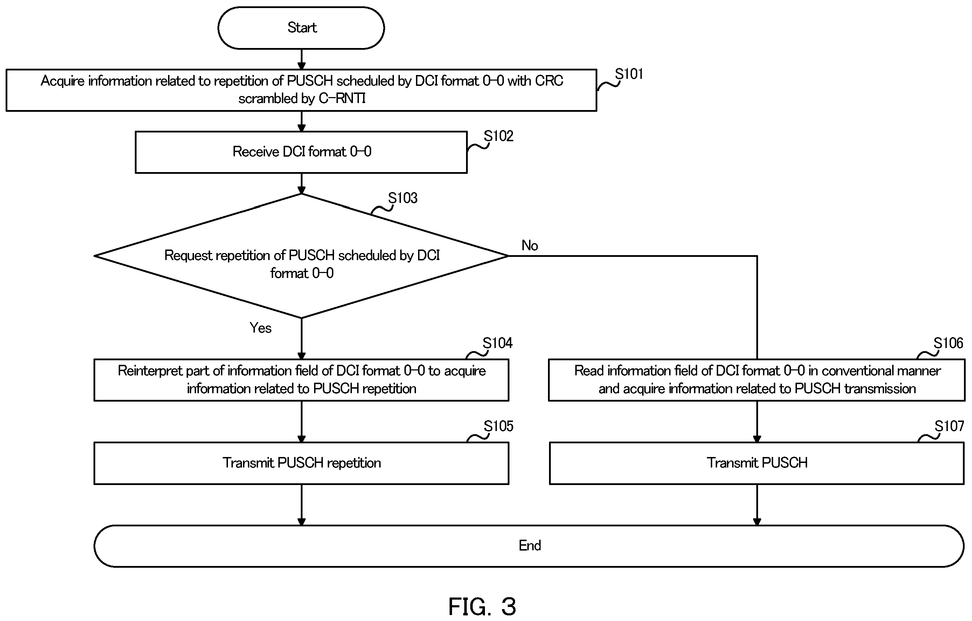

FIG. 3 is a flowchart illustrating an example of the operation of terminal 200.

In FIG. 3, terminal 200 acquires information related to repetition of PUSCH (e.g., Msg.5 PUSCH) scheduled by DCI format 0-0 with a CRC scrambled by a C-RNTI (S101). The information related to PUSCH repetition acquired by terminal 200 in S101 may include, for example, a plurality of candidates for information related to repetition (e.g., number of repetitions) indicated by DCI format 0-0, information related to the information field reused for the information related to repetition in DCI format 0-0, or information such as the number of bits X assigned for the information related to repetition in that information field. Note that the above information (some or all of the information) may be pre-determined by the specification.

### Terminal 200 receives DCI format 0-0 (S102).

Terminal 200 determines whether repetition of the PUSCH scheduled by DCI format 0-0 has been requested (S103).

When repetition of the PUSCH has been requested (S103: Yes), terminal 200 reinterprets a part of information fields (e.g., some bits) of the received DCI format 0-0 to acquire information related to PUSCH repetition (e.g., number of repetitions) (S104). Terminal 200 then transmits PUSCH repetition (e.g., PUSCH subject to repetition) (S105).

On the other hand, when repetition of the PUSCH has not been requested (S103: No), terminal 200 reads the information fields of the received DCI format 0-0 in the conventional manner to acquire information related to PUSCH transmission (S106). Terminal 200 then transmits the PUSCH (S107).

As described above, in the present embodiment, terminal 200 receives DCI format 0-0 that includes a CRC scrambled by a C-RNTI and schedules PUSCH independently of a UE-specific RRC configuration (e.g., dedicated RRC configuration), and performs PUSCH repetition based on information related to PUSCH repetition identified based on the received DCI format 0-0. Furthermore, base station 100 transmits DCI format 0-0 that includes a CRC scrambled by a C-RNTI and schedules PUSCH independently of a UE-specific RRC configuration, and receives PUSCH repetition based on information related to the PUSCH repetition identified based on the transmitted DCI format 0-0.

In the present embodiment, information related to repetition is assigned to at least a part of information fields included in DCI format 0-0 and originally indicating information different from the information related to repetition.

This allows terminal 200 to control repetition transmission for the PUSCH scheduled by DCI format 0-0 with a CRC scrambled by a C-RNTI. Furthermore, for the PUSCH scheduled by DCI format 0-0 with a CRC scrambled by a C-RNTI, it is possible to indicate the information related to repetition to terminal 200 by DCI format 0-0.

Therefore, according to the present embodiment, the repetition function can be efficiently applied to the PUSCH scheduled by DCI format 0-0 with a CRC scrambled by a C-RNTI, taking into account the transmission of Msg.5 PUSCH (e.g., PUSCH including RRCSetupComplete). As a result, terminal 200 can appropriately transmit signals in the uplink.

### (Embodiment 2)

In the present embodiment, application of repetition to PUSCH transmission is assumed for: Msg.5 PUSCH, a PUSCH including RRCSetupComplete, or a PUSCH scheduled by DCI format 0-0 with a CRC scrambled by a C-RNTI after terminal 200 transmits Msg.3 PUSCH and before a UE-specific PUSCH configuration (e.g., dedicated PUSCH configuration) is completed.

Note that, in the present embodiment, the above PUSCHs are collectively referred to as "Msg.5 PUSCH."

In Embodiment 1, a part of the existing information fields of DCI format 0-0 is used (reused) to indicate information related to PUSCH repetition. Thus, there is a possibility that scheduling flexibility for the existing parameter indicated by the information field used for indication of the information related to PUSCH repetition may be reduced.

Here, it is assumed that the target of application of the function (enhanced function) of applying repetition to the PUSCH scheduled by DCI format 0-0 with a CRC scrambled by a C-RNTI is: Msg.5 PUSCH, a PUSCH including RRCSetupComplete, or a PUSCH scheduled before a UE-specific PUSCH configuration is completed after terminal 200 transmits Msg.3 PUSCH.

In this case, terminal 200 monitors PDCCH candidates for DCI format 0-0 with a CRC scrambled by a C-RNTI within a Type1-PDCCH CSS Set, and applies repetition to the PUSCH scheduled by the decoded DCI (e.g., DCI format 0-0 with a CRC scrambled by a C-RNTI). At this time, it is assumed that terminal 200 cannot utilize a UE-specific PDCCH reception configuration. For this reason, terminal 200 is expected to have margin in its blind decoding count, for example, because terminal 200 does not monitor UE-specific USS.

Then, in the present embodiment, terminal 200 monitors PDCCH candidates for a DCI format specific to PUSCH repetition scheduled by DCI format 0-0 with a CRC scrambled by a C-RNTI.

For example, terminal 200 monitors PDCCH candidates for DCI format 0-0 with a payload size different from that of the existing DCI format 0-0 with a CRC scrambled by a C-RNTI. Furthermore, for example, base station 100 generates and transmits to terminal 200 DCI format 0-0 with a CRC scrambled by a C-RNTI, which includes information related to Msg.5 PUSCH repetition, using a payload size different from that of the existing DCI format 0-0 with a CRC scrambled by a C-RNTI.

Terminal 200 monitors PDCCH candidates for DCI format 0-0 with a CRC scrambled by a C-RNTI, for example within a Type1-PDCCH CSS Set. At this time, terminal 200 performs blind decoding of DCI format 0-0 with a payload size different from that of the existing DCI format 0-0 (and DCI format 1-0), in addition to the existing DCI format 0-0 (e.g., DCI not including an information field for repetition) and DCI format 1-0. That is, terminal 200 performs blind decoding of DCI format 0-0 for multiple payload sizes. Note that terminal 200 performing blind decoding of DCI format 0-0 for multiple payload sizes may be, for example, terminal 200 that has requested Msg.5 PUSCH repetition, terminal 200 that has indicated, to base station 100, its Msg.5 PUSCH repetition capability, or terminal 200 that has Msg.5 PUSCH repetition capability.

Here, DCI format 0-0 with a payload size different from that of the existing DCI format 0-0 with a CRC scrambled by a C-RNTI may be, for example, a DCI format in which an information field for indicating information related to PUSCH repetition is added to the existing DCI format 0-0. The information field for indicating information related to PUSCH repetition may be at least one of, for example, an information field for indicating the number of repetitions and another information field (e.g., indication regarding frequency hopping method, indication regarding whether to use flexible symbols). In addition, an information field added to the existing DCI format 0-0 is not limited to an information field for indicating information related to PUSCH repetition, and may also be an information field used for other purposes different from PUSCH repetition. Furthermore, in addition to the added information field, reserved bits intended to accommodate future specification extensions may also be added to the existing DCI format 0-0.

When the payload size of the successfully decoded DCI (e.g., DCI format 0-0 with a CRC scrambled by a C-RNTI) equals the payload size of the existing DCI format 0-0 (and DCI format 1-0), terminal 200 determines that repetition is not applied to the scheduled PUSCH and transmits the PUSCH.

On the other hand, when the payload size of the successfully decoded DCI (e.g., DCI format 0-0 with a CRC scrambled by a C-RNTI) differs from the payload size of the existing DCI format 0-0 (and DCI format 1-0), terminal 200 determines that repetition is applied to the scheduled PUSCH and transmits the PUSCH with repetition.

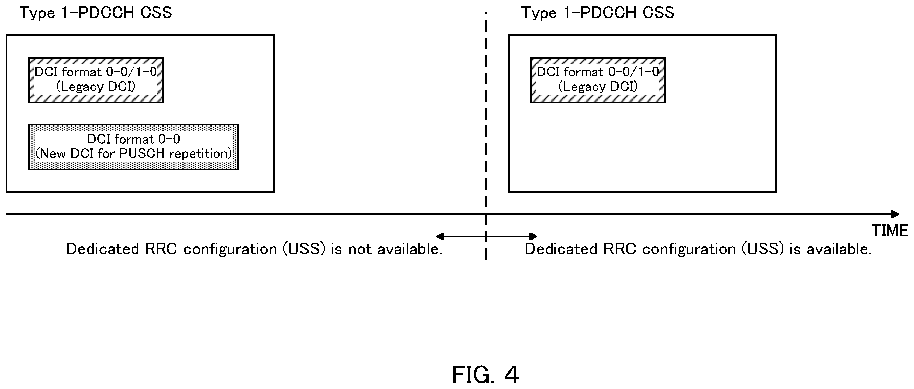

Furthermore, in the present embodiment, for example, as illustrated in FIG. 4, the timing (or period) at which blind decoding of multiple payload sizes (e.g., existing DCI and new DCI) is performed for PDCCH candidates for DCI format 0-0 with a CRC scrambled by a C-RNTI within a Type1-PDCCH CSS Set may be the timing (or period) until terminal 200 is given a Type3-PDCCH CSS Set (e.g., SearchSpaceType = common in UE-specific PDCCH-Config) or a USS Set. As illustrated in FIG. 4, after terminal 200 is given a Type3-PDCCH CSS Set or a USS Set, blind decoding of multiple payload sizes within a Type1-PDCCH CSS Set need not be performed. For example, as illustrated in FIG. 4, after terminal 200 is given a Type3-PDCCH CSS Set or a USS Set, blind decoding of the existing DCI may be performed within a Type1-PDCCH CSS Set. This makes it possible to suppress any increase in the number of blind decodings performed for different DCI payload sizes (e.g., up to four times), and to limit the impact on DCI decoding after USS acquisition.

Note that the blind decoding operation in terminal 200 is not limited to the example illustrated in FIG. 4; for example, after terminal 200 is given a Type3-PDCCH CSS Set or a USS Set, terminal 200 may perform blind decoding of multiple payload sizes (e.g., existing DCI and new DCI).

### [Operation example of terminal 200]

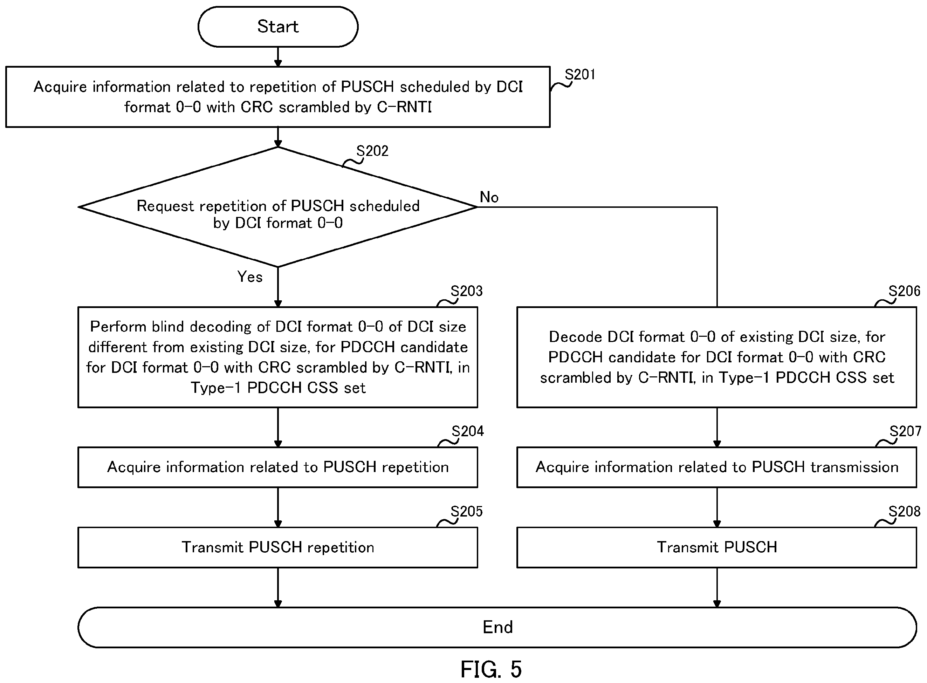

FIG. 5 is a flowchart illustrating an exemplary operation of terminal 200.

In FIG. 5, terminal 200 acquires information related to repetition of PUSCH (e.g., Msg.5 PUSCH) scheduled by DCI format 0-0 with a CRC scrambled by a C-RNTI (S201). The information related to PUSCH repetition acquired by terminal 200 in S201 may include, for example, information on the payload size of DCI format 0-0 (or the size of the information field for PUSCH repetition in DCI format 0-0).

Terminal 200 determines whether repetition of the PUSCH scheduled by DCI format 0-0 has been requested (S202).

When repetition of the PUSCH has been requested (S202: Yes), terminal 200 performs blind decoding (monitoring) of DCI format 0-0 for multiple payload sizes of DCI (e.g., the existing DCI size and a DCI size different from the existing DCI size) for PDCCH candidates for DCI format 0-0 with a CRC scrambled by a C-RNTI, for example, within a Type-1 PDCCH CSS Set (S203). Then, for example, when blind decoding of DCI format 0-0 with a payload size different from the existing DCI size is successful, terminal 200 acquires information related to PUSCH repetition (e.g., number of repetitions) from the DCI format 0-0 (S204). Terminal 200 then transmits PUSCH repetition (e.g., PUSCH subject to repetition) (S205).

On the other hand, when repetition of the PUSCH has not been requested (S202: No), terminal 200 performs blind decoding (monitoring) of DCI format 0-0 with the existing DCI size for PDCCH candidates for DCI format 0-0 with a CRC scrambled by a C-RNTI, for example, within a Type-1 PDCCH CSS Set (S206). Then, for example, when blind decoding of DCI format 0-0 with the existing DCI size is successful, terminal 200 acquires information related to PUSCH transmission from the DCI format 0-0 (S207). Terminal 200 then transmits the PUSCH (S208).

As described above, in the present embodiment, terminal 200 receives DCI format 0-0 that includes a CRC scrambled by a C-RNTI and schedules PUSCH independently of a UE-specific RRC configuration (e.g., dedicated RRC configuration), and performs PUSCH repetition based on information related to PUSCH repetition identified based on the received DCI format 0-0.

In the present embodiment, DCI format 0-0 with a payload size different from that of the existing DCI format 0-0, i.e., DCI formats 0-0 with multiple payloads, are used. For example, DCI format 0-0 with a payload size different from that of the existing DCI format 0-0 includes an information field for indicating information related to PUSCH repetition. This makes it possible, according to the present embodiment, to indicate information related to PUSCH repetition (e.g., number of repetitions) without modifying the existing information fields. This allows for scheduling of PUSCH repetition without degrading scheduling flexibility for other parameters unrelated to PUSCH repetition.

Furthermore, terminal 200 performs blind decoding of multiple payload sizes for PDCCH candidates for DCI format 0-0 with a CRC scrambled by a C-RNTI when a UE-specific PDCCH reception configuration is not available, where terminal 200 has relatively sufficient margin in its blind decoding count. For example, terminal 200 performs blind decoding of DCI format 0-0 for multiple payload sizes until a UE-specific search space (e.g., Type3-PDCCH CSS Set or USS Set) is provided. On the other hand, when a UE-specific PDCCH reception configuration is available, terminal 200 performs blind decoding of the existing DCI size and does not perform blind decoding of DCI format 0-0 with a size different from the existing DCI size, for PDCCH candidates for DCI format 0-0 with a CRC scrambled by a C-RNTI. This makes it possible to limit the impact on the blind decoding capability of terminal 200.

### (Embodiment 3)

In the present embodiment, application of repetition to PUSCH is assumed for: Msg.5 PUSCH, a PUSCH including RRCSetupComplete, or a PUSCH scheduled by DCI format 0-0 with a CRC scrambled by a C-RNTI after terminal 200 transmits Msg.3 PUSCH and before a UE-specific PUSCH configuration (e.g., dedicated PUSCH configuration) is completed.

Note that in the present embodiment, the above PUSCHs are collectively referred to as "Msg.5 PUSCH."

In the present embodiment, terminal 200 monitors PDCCH candidates for multiple DCI formats 0-0 each with a CRC scrambled by a different C-RNTI. For example, for DCI format 0-0 with a CRC scrambled by a C-RNTI, terminal 200 monitors PDCCH candidates respectively corresponding to multiple RNTIs, namely a C-RNTI for PUSCH scheduling to which PUSCH repetition is not applied and a C-RNTI for PUSCH scheduling to which PUSCH repetition is applied.

For example, terminal 200 monitors PDCCH candidates for DCI format 0-0 with a CRC scrambled by a C-RNTI within a Type1-PDCCH CSS Set. At this time, terminal 200 performs blind decoding of multiple DCI formats 0-0 with CRCs scrambled by different C-RNTIs. That is, terminal 200 performs blind decoding of DCI format 0-0 for multiple C-RNTIs. Note that terminal 200 performing blind decoding of DCI format 0-0 for multiple C-RNTIs may be, for example, terminal 200 that has requested Msg.5 PUSCH repetition, terminal 200 that has indicated, to base station 100, its Msg.5 PUSCH repetition capability, or terminal 200 that has Msg.5 PUSCH repetition capability.

Here, the multiple different C-RNTIs may be, for example, C-RNTIs given as "n" and "n+1" when the C-RNTI configured for terminal 200 is "n," where C-RNTI n is a C-RNTI for PUSCH scheduling to which PUSCH repetition is applied and C-RNTI n+1 is a C-RNTI for PUSCH scheduling to which PUSCH repetition is applied.

The C-RNTI for PUSCH scheduling to which PUSCH repetition is applied is not limited to n+1, and may also be a value calculated from C-RNTI n by another method. The C-RNTI for PUSCH scheduling to which PUSCH repetition is applied may also be pre-defined in the specification or may be a value calculated from a parameter configured for terminal 200 via SIB or RRC.

When the successfully decoded DCI (e.g., DCI format 0-0 with a CRC scrambled by a C-RNTI) has been scrambled by a C-RNTI for PUSCH scheduling to which PUSCH repetition is not applied (e.g., DCI format 0-0 that does not indicate information related to PUSCH repetition), terminal 200 determines that repetition is not applied to the scheduled PUSCH and transmits the PUSCH.

On the other hand, when the successfully decoded DCI (e.g., DCI format 0-0 with a CRC scrambled by a C-RNTI) has been scrambled by a C-RNTI for PUSCH scheduling to which PUSCH repetition is applied (e.g., DCI format 0-0 that indicates information related to PUSCH repetition), terminal 200 determines that repetition is applied to the scheduled PUSCH and transmits the PUSCH with repetition. In this case, for example, information related to PUSCH repetition (e.g., number of repetitions) may be indicated to terminal 200 by reusing a part of information fields of DCI format 0-0 based on one of the methods of Options 1 to 6 described in Embodiment 1.

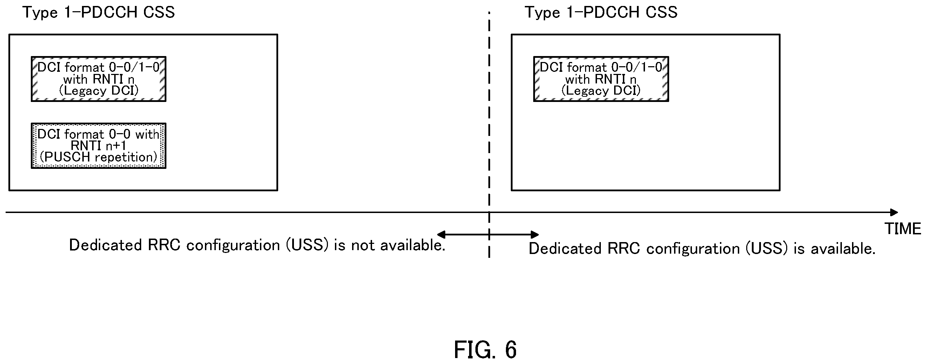

Furthermore, in the present embodiment, for example, as illustrated in FIG. 6, the timing (or period) at which blind decoding of multiple C-RNTIs is performed for PDCCH candidates for DCI format 0-0 with a CRC scrambled by a C-RNTI within a Type1-PDCCH CSS Set may be the timing (or period) at which terminal 200 is given a Type3-PDCCH CSS Set (e.g., SearchSpaceType = common in UE-specific PDCCH-Config) or a USS Set. As illustrated in FIG. 6, after terminal 200 is given a Type3-PDCCH CSS Set or a USS Set, blind decoding of multiple C-RNTIs within a Type1-PDCCH CSS Set need not be performed. For example, as illustrated in FIG. 6, after terminal 200 is given a Type3-PDCCH CSS Set or a USS Set, blind decoding of the existing C-RNTI may be performed within a Type1-PDCCH CSS Set. This makes it possible to suppress any increase in the number of blind decodings performed for different C-RNTIs (e.g., up to four times), and to limit the impact on DCI decoding after USS acquisition.

Note that the blind decoding operation in terminal 200 is not limited to the example illustrated in FIG. 6; for example, after terminal 200 is given a Type3-PDCCH CSS Set or a USS Set, terminal 200 may perform blind decoding of multiple C-RNTIs (e.g., existing DCI and new DCI).

As described above, in the present embodiment, terminal 200 receives DCI format 0-0 that includes a CRC scrambled by a C-RNTI and schedules PUSCH independently of a UE-specific RRC configuration (e.g., dedicated RRC configuration), and performs PUSCH repetition based on information related to PUSCH repetition identified based on the received DCI format 0-0.

In the present embodiment, DCI formats 0-0 with multiple payloads are used as DCI format 0-0 with a CRC scrambled by a C-RNTI. For example, in DCI format 0-0 using a C-RNTI different from the C-RNTI of the existing DCI format 0-0, information related to PUSCH repetition is indicated in a part of the information fields used to indicate other parameters, as in Embodiment 1. This makes it possible, according to the present embodiment, to differentiate, depending on whether PUSCH repetition is applied, whether to reuse the part of the information fields of the DCI format for information related to PUSCH repetition (e.g., number of repetitions). For example, when PUSCH repetition is not applied, the existing information fields need not be modified, thereby maintaining scheduling flexibility for cases where PUSCH repetition is not applied.

Furthermore, terminal 200 performs blind decoding of multiple C-RNTIs for PDCCH candidates for DCI format 0-0 with a CRC scrambled by a C-RNTI when a UE-specific PDCCH reception configuration is not available, where terminal 200 has relatively sufficient margin in its blind decoding count. For example, terminal 200 performs blind decoding of DCI format 0-0 for multiple C-RNTIs until a UE-specific search space (e.g., Type3-PDCCH CSS Set or USS Set) is provided. On the other hand, when a UE-specific PDCCH reception configuration is available, terminal 200 performs blind decoding on the existing C-RNTI for PDCCH candidates for DCI format 0-0 with a CRC scrambled by a C-RNTI, and does not perform blind decoding on the C-RNTI different from the existing C-RNTI. This makes it possible to limit the impact on the blind decoding capability of terminal 200.

Note that the PUSCH to which the present embodiment is applicable is not limited to the above-described Msg.5 PUSCH, a PUSCH including RRCSetupComplete, or a PUSCH scheduled by DCI format 0-0 with a CRC scrambled by a C-RNTI after terminal 200 transmits Msg.3 PUSCH and before a UE-specific PUSCH configuration is completed. For example, the present embodiment is also applicable to a PUSCH scheduled by DCI format 0-0 with a CRC scrambled by a C-RNTI after a UE-specific PUSCH configuration has been completed.

Furthermore, in the present embodiment, the case in which, when PUSCH repetition is applied, a part of information fields of the existing DCI format 0-0 is reinterpreted (reused) as information related to PUSCH repetition as in Embodiment 1 has been described; however, the method of indicating information related to PUSCH repetition is not limited thereto. For example, when the successfully decoded DCI format 0-0 is scrambled with the C-RNTI for PUSCH scheduling to which PUSCH repetition is applied, terminal 200 may determine that PUSCH repetition is applied and perform PUSCH repetition. That is, application of PUSCH repetition may be implicitly indicated to terminal 200. In this case, information related to PUSCH repetition (e.g., number of repetitions) may be pre-defined in the specification or may be configured for terminal 200 via SIB or RRC.

In addition, in the present embodiment, the number of C-RNTIs used when PUSCH repetition is applied (i.e., C-RNTI different from the existing C-RNTI) is not limited to one, and a plurality of C-RNTIs may be configured. For example, the PUSCH repetition behavior (e.g., number of repetitions) may differ for each of the plurality of C-RNTIs.

### (Variation of Embodiment 3)

In Embodiment 3, a method of distinguishing whether DCI format 0-0 with a CRC scrambled by a C-RNTI includes information related to PUSCH repetition, by using different C-RNTIs for PUSCH scheduling to which PUSCH repetition is not applied and for PUSCH scheduling to which PUSCH repetition is applied has been described, but the present disclosure is not limited thereto.

For example, instead of using different C-RNTIs, a method of distinguishing whether DCI format 0-0 with a CRC scrambled by a C-RNTI includes information related to PUSCH repetition by using different CRC masks may be applied to achieve the same effect as in Embodiment 3.

For example, no CRC mask may be applied to DCI format 0-0 for PUSCH scheduling to which PUSCH repetition is not applied (or CRC mask of [0, 0, 0, 0, ..., 0] may be applied), while a CRC mask may be applied to DCI format 0-0 for PUSCH scheduling to which PUSCH repetition is applied. As one example, applying a CRC mask of [0, 0, 0, 0, ..., 1] to DCI format 0-0 for PUSCH scheduling to which PUSCH repetition is applied yields an effect equivalent to using C-RNTIs n and n+1.

### (Embodiment 4)

In the present embodiment, application of repetition to PUSCH is assumed for: Msg.5 PUSCH, a PUSCH including RRCSetupComplete, or a PUSCH scheduled by DCI format 0-0 with a CRC scrambled by a C-RNTI after terminal 200 transmits Msg.3 PUSCH and before a UE-specific PUSCH configuration (e.g., dedicated PUSCH configuration) is completed.

Note that in the present embodiment, the above PUSCHs are collectively referred to as "Msg.5 PUSCH."

Furthermore, the PUSCH to which the present embodiment is applicable is not limited to the above-described Msg.5 PUSCH, a PUSCH including RRCSetupComplete, or a PUSCH scheduled by DCI format 0-0 with a CRC scrambled by a C-RNTI after terminal 200 transmits Msg.3 PUSCH and before a UE-specific PUSCH configuration is completed. For example, the present embodiment is also assumed to be applicable to a PUSCH scheduled by DCI format 0-0 with a CRC scrambled by a C-RNTI after a UE-specific PUSCH configuration has been completed.

In the present embodiment, the function (or mechanism) for PUSCH repetition is configured (or kept) the same for: the repetition of Msg.5 PUSCH (e.g., PUSCH scheduled by DCI format 0-0 with a CRC scrambled by a C-RNTI before a UE-specific PUSCH configuration is completed) and the PUSCH scheduled by DCI format 0-0 with a CRC scrambled by a C-RNTI after a UE-specific PUSCH configuration has been completed.

For example, when the method of Embodiment 1 (e.g., one of the methods of Options 1 to 6) or the method of Embodiment 3 is applied to the repetition of Msg.5 PUSCH (e.g., PUSCH scheduled by DCI format 0-0 with a CRC scrambled by a C-RNTI before a UE-specific PUSCH configuration is completed), the same method as that applied to the repetition of Msg.5 PUSCH is also applied to the PUSCH scheduled by DCI format 0-0 with a CRC scrambled by a C-RNTI after a UE-specific PUSCH configuration has been completed.

According to the present embodiment, base station 100 can apply repetition and schedule PUSCH scheduled by DCI format 0-0 with a CRC scrambled by a C-RNTI without distinguishing between a PUSCH scheduled by DCI format 0-0 with a CRC scrambled by a C-RNTI before a UE-specific PUSCH configuration is completed and a PUSCH scheduled by DCI format 0-0 with a CRC scrambled by a C-RNTI after a UE-specific PUSCH configuration has been completed, without determining the RRC processing latency (e.g., RRC decoding time) of terminal 200.

### (Embodiment 5)

In the present embodiment, application of repetition to PUSCH is assumed for: Msg.5 PUSCH, a PUSCH including RRCSetupComplete, or a PUSCH scheduled by DCI format 0-0 with a CRC scrambled by a C-RNTI after terminal 200 transmits Msg.3 PUSCH and before a UE-specific PUSCH configuration (e.g., dedicated PUSCH configuration) is completed.

Note that in the present embodiment, the above PUSCHs are collectively referred to as "Msg.5 PUSCH."

Furthermore, the PUSCH to which the present embodiment is applicable is not limited to the above-described Msg.5 PUSCH, a PUSCH including RRCSetupComplete, or a PUSCH scheduled by DCI format 0-0 with a CRC scrambled by a C-RNTI after terminal 200 transmits Msg.3 PUSCH and before a UE-specific PUSCH configuration is completed. For example, the present embodiment is also assumed to be applicable to a PUSCH scheduled by DCI format 0-0 with a CRC scrambled by a C-RNTI after a UE-specific PUSCH configuration has been completed.

In the present embodiment, the function (or mechanism) for PUSCH repetition is differentiated between the repetition of Msg.5 PUSCH (e.g., PUSCH scheduled by DCI format 0-0 with a CRC scrambled by a C-RNTI before a UE-specific PUSCH configuration is completed) and a PUSCH scheduled by DCI format 0-0 with a CRC scrambled by a C-RNTI after a UE-specific PUSCH configuration has been completed.

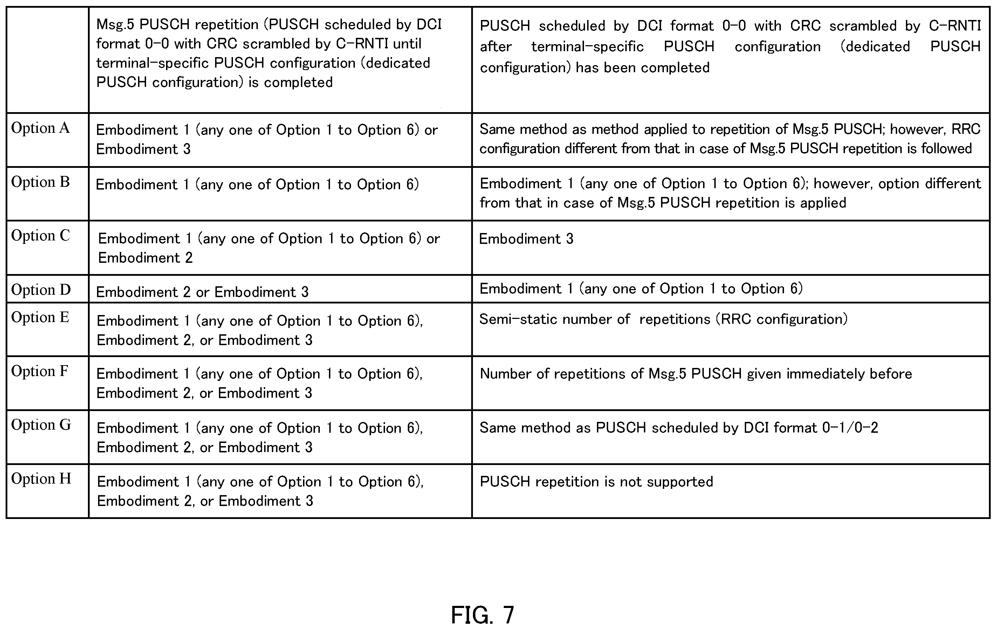

For example, the function applied to the repetition of Msg.5 PUSCH (e.g., PUSCH scheduled by DCI format 0-0 with a CRC scrambled by a C-RNTI before a UE-specific PUSCH configuration is completed) and the function applied to a PUSCH scheduled by DCI format 0-0 with a CRC scrambled by a C-RNTI after a UE-specific PUSCH configuration has been completed may be selected from any of the combinations (Options A to H) illustrated in FIG. 7.

### <Option A>

In Option A, for example, the method of Embodiment 1 (e.g., one of the methods of Options 1 to 6) or the method of Embodiment 3 is applied to Msg.5 PUSCH repetition (e.g., PUSCH scheduled by DCI format 0-0 with a CRC scrambled by a C-RNTI before a UE-specific PUSCH configuration is completed).

Furthermore, the same method as that applied to the repetition of Msg.5 PUSCH is applied to a PUSCH scheduled by DCI format 0-0 with a CRC scrambled by a C-RNTI after a UE-specific PUSCH configuration has been completed. However, in this case, an RRC configuration different from the RRC configuration for Msg.5 PUSCH may be followed. For example, when the method of Embodiment 1 is applied, between the case of Msg.5 PUSCH repetition and the case of repetition of PUSCH scheduled by DCI format 0-0 with a CRC scrambled by a C-RNTI after a UE-specific PUSCH configuration has been completed, different candidates may be configured by RRC for information related to PUSCH repetition (e.g., number of repetitions) and other parameter candidates that may be indicated.

### <Option B>

In Option B, for example, the method of Embodiment 1 (e.g., one of the methods of Options 1 to 6) is applied to Msg.5 PUSCH repetition (e.g., PUSCH scheduled by DCI format 0-0 with a CRC scrambled by a C-RNTI before a UE-specific PUSCH configuration is completed).

Furthermore, the method of Embodiment 1 (e.g., one of the methods of Options 1 to 6) is applied to a PUSCH scheduled by DCI format 0-0 with a CRC scrambled by a C-RNTI after a UE-specific PUSCH configuration has been completed. However, for that PUSCH, an option different from the option applied during Msg.5 PUSCH repetition is applied.

### <Option C>

In Option C, the method of Embodiment 1 (e.g., one of the methods of Options 1 to 6) or the method of Embodiment 2 is applied to the repetition of Msg.5 PUSCH (e.g., PUSCH scheduled by DCI format 0-0 with a CRC scrambled by a C-RNTI before a UE-specific PUSCH configuration is completed).

Furthermore, the method of Embodiment 3 is applied to a PUSCH scheduled by DCI format 0-0 with a CRC scrambled by a C-RNTI after a UE-specific PUSCH configuration has been completed.

### <Option D>

In Option D, the method of Embodiment 2 or the method of Embodiment 3 is applied to the repetition of Msg.5 PUSCH (e.g., PUSCH scheduled by DCI format 0-0 with a CRC scrambled by a C-RNTI before a UE-specific PUSCH configuration is completed).

Furthermore, the method of Embodiment 1 (e.g., one of the methods of Options 1 to 6) is applied to a PUSCH scheduled by DCI format 0-0 with a CRC scrambled by a C-RNTI after a UE-specific PUSCH configuration has been completed.

### <Option E>

In Option E, the method of Embodiment 1 (e.g., one of the methods of Options 1 to 6), the method of Embodiment 2, or the method of Embodiment 3 is applied to the repetition of Msg.5 PUSCH (e.g., PUSCH scheduled by DCI format 0-0 with a CRC scrambled by a C-RNTI before a UE-specific PUSCH configuration is completed).

Furthermore, for a PUSCH scheduled by DCI format 0-0 with a CRC scrambled by a C-RNTI after a UE-specific PUSCH configuration has been completed, the number of repetitions is configured by UE-specific RRC, and terminal 200 applies repetition to the PUSCH scheduled by DCI format 0-0 with a CRC scrambled by a C-RNTI based on the semi-static number of repetitions configured by RRC.

### <Option F>

In Option F, the method of Embodiment 1 (e.g., one of the methods of Options 1 to 6), the method of Embodiment 2, or the method of Embodiment 3 is applied to the repetition of Msg.5 PUSCH (e.g., PUSCH scheduled by DCI format 0-0 with a CRC scrambled by a C-RNTI before a UE-specific PUSCH configuration is completed).

Furthermore, for the PUSCH scheduled by DCI format 0-0 with a CRC scrambled by a C-RNTI after a UE-specific PUSCH configuration has been completed, repetition based on the number of repetitions of Msg.5 PUSCH repetition given immediately prior is applied.

### <Option G>

In Option G, the method of Embodiment 1 (e.g., one of the methods of Options 1 to 6), the method of Embodiment 2, or the method of Embodiment 3 is applied to the repetition of Msg.5 PUSCH (e.g., PUSCH scheduled by DCI format 0-0 with a CRC scrambled by a C-RNTI before a UE-specific PUSCH configuration is completed).

Furthermore, for a PUSCH scheduled by DCI format 0-0 with a CRC scrambled by a C-RNTI after a UE-specific PUSCH configuration has been completed, the number of repetitions is configured in the same manner as for a PUSCH scheduled by DCI format 0-1/0-2 up to Release 18. For example, a table of up to 2⁵ rows, each containing parameters related to TDRA (e.g., slot index, number of symbols) and the number of repetitions as columns, may be configured by RRC, and by indicating, to terminal 200, one of the indices corresponding to the rows of the table, the TDRA parameters and the number of repetitions may be indicated.

### <Option H>

In Option H, the method of Embodiment 1 (e.g., one of the methods of Options 1 to 6), the method of Embodiment 2, or the method of Embodiment 3 is applied to the repetition of Msg.5 PUSCH (e.g., PUSCH scheduled by DCI format 0-0 with a CRC scrambled by a C-RNTI before a UE-specific PUSCH configuration is completed).

Furthermore, PUSCH repetition is not supported for a PUSCH scheduled by DCI format 0-0 with a CRC scrambled by a C-RNTI after a UE-specific PUSCH configuration has been completed.

The above describes examples of combinations of functions applied to each PUSCH. Note that the functions applied to each PUSCH and the combinations of functions are not limited to the examples illustrated in FIG. 7.

According to the present embodiment, it is possible to have the flexibility to apply different design principles for the PUSCH scheduled by DCI format 0-0 with a CRC scrambled by a C-RNTI before a UE-specific PUSCH configuration is completed, and the PUSCH scheduled by DCI format 0-0 with a CRC scrambled by a C-RNTI after a UE-specific PUSCH configuration has been completed.

### (Variation of Embodiments 4 and 5)

In the above-described Embodiments 4 and 5, a switching of transmission timing may occur between the transmission of Msg.5 PUSCH repetition (e.g., PUSCH scheduled by DCI format 0-0 with a CRC scrambled by a C-RNTI before a UE-specific PUSCH configuration (dedicated PUSCH configuration) is completed) and the transmission of a PUSCH scheduled by DCI format 0-0 with a CRC scrambled by a C-RNTI after a UE-specific PUSCH configuration (dedicated PUSCH configuration) has been completed.

In this case, the switching timing (e.g., the timing at which a UE-specific PUSCH configuration is completed) may be, for example, the timing after terminal 200 has successfully received an RRC message (e.g., RRCSetup) and the corresponding RRC decoding time defined in NPL 9 has elapsed.

For example, the switching timing may be configured as "a fixed period after reception of the RRC message (e.g., RRCSetup) (e.g., 10 ms)," which is the required time for RRC processing from RRCSetup to transmission of RRCSetupComplete.

Furthermore, the switching timing (e.g., the timing at which a UE-specific PUSCH configuration is completed) may be pre-defined in the specification or may be configured for terminal 200 via SIB or RRC. For example, a fixed period after reception of the RRC message (e.g., RRCSetup) (e.g., 10 ms) may be configured.

Note that the period after reception of the RRC message (e.g., RRCSetup) that is configured as the switching timing is not limited to 10 ms, and other values may also be used.

### [Configuration of Base Station]

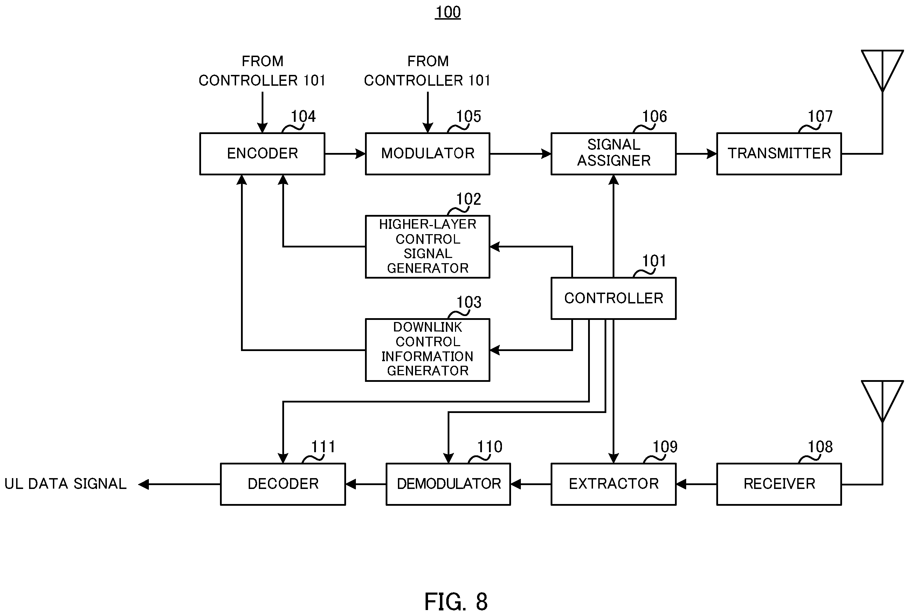

FIG. 8 is a block diagram illustrating a configuration example of base station 100. In FIG. 8, base station 100 includes controller 101, higher-layer control signal generator 102, downlink control information generator 103, encoder 104, modulator 105, signal assigner 106, transmitter 107, receiver 108, extractor 109, demodulator 110, and decoder 111.

Note that transmitter 107 illustrated in FIG. 8 may be included in the transmitter illustrated in FIG. 1. In addition, at least one of controller 101, higher-layer control signal generator 102, downlink control information generator 103, encoder 104, modulator 105, signal assigner 106, receiver 108, extractor 109, demodulator 110, and decoder 111 illustrated in FIG. 8 may be included in the receiver illustrated in FIG. 1.

Controller 101 determines, for example, information on uplink transmission (e.g., PUSCH transmission) for terminal 200 and outputs the determined information to at least one of higher-layer control signal generator 102 and downlink control information generator 103. The information on the PUSCH transmission may include, for example, information on PUSCH repetition (e.g., the number of repetitions), time domain resource allocation information (e.g., TDRA), and frequency domain resource allocation information (e.g., FDRA). Further, controller 101 outputs the determined information to extractor 109, demodulator 110, and decoder 111.

Further, controller 101 determines, for example, information on a downlink signal for transmitting a higher-layer control signal or downlink control information (e.g., modulation and coding scheme (MCS) and radio resource allocation), and outputs the determined information to encoder 104, modulator 105, and signal assigner 106. Further, controller 101 outputs the information on the downlink signal (e.g., a data signal or a higher-layer control signal) to downlink control information generator 103, for example.

Higher-layer control signal generator 102 generates a higher-layer control signal bit sequence, for example, based on the information input from controller 101, and outputs the higher-layer control signal bit sequence to encoder 104.

Downlink control information generator 103 generates a downlink control information (e.g., DCI) bit sequence, for example, based on the information input from controller 101, and outputs the generated DCI bit sequence to encoder 104. Note that, the control information may be sometimes transmitted to a plurality of terminals. For example, downlink control information generator 103 may generate a DCI bit sequence (also referred to as DCI sequence) including information related to PUSCH repetition in accordance with any of the above-described embodiments. In addition, downlink control information generator 103 may add a CRC sequence scrambled by an RNTI (e.g., C-RNTI) to the DCI sequence in accordance with any of the above-described embodiments.

Encoder 104 encodes, for example, based on the information input from controller 101, the bit sequence input from higher-layer control signal generator 102 or the DCI bit sequence input from downlink control information generator 103. Encoder 104 outputs the encoded bit sequence to modulator 105.

Modulator 105 modulates the encoded bit sequence input from encoder 104, for example, based on the information input from controller 101, and outputs the modulated signal (e.g., a symbol sequence) to signal assigner 106.

Signal assigner 106 maps the symbol sequence (e.g., including a downlink data signal or a control signal) input from modulator 105 to a radio resource based on the information indicating the radio resource input from controller 101, for example. Signal assigner 106 outputs, to transmitter 107, the downlink signal for which the signal has been mapped.

Transmitter 107 performs, for example, transmission waveform generation processing such as orthogonal frequency division multiplexing (OFDM), on the signal input, for example, from signal assigner 106. Further, for example, in the case of OFDM transmission in which a cyclic prefix (CP) is added, transmitter 107 performs Inverse Fast Fourier Transform (IFFT) processing on the signal, and adds a CP to the signal after the IFFT. Further, transmitter 107 performs, for example, RF processing such as D/A conversion or up-conversion on the signal, and transmits a radio signal to terminal 200 via an antenna.

Receiver 108, for example, performs RF processing such as down-conversion or A/D conversion on the uplink signal received from terminal 200 through an antenna. Further, in the case of OFDM transmission, receiver 108 performs Fast Fourier Transform (FFT) processing on the received signal, for example, and outputs the obtained frequency domain signal to extractor 109.

Extractor 109 extracts, for example, a radio resource portion in which an uplink signal (e.g., PUSCH) has been transmitted, from the received signal input from receiver 108, based on the information input from controller 101, and outputs the extracted radio resource portion to demodulator 110.

Demodulator 110 demodulates the uplink signal (e.g., PUSCH) input from extractor 109 based on the information input from controller 101, for example. Demodulator 110 outputs, for example, the demodulation result to decoder 111.

Decoder 111 performs error correction decoding of the uplink signal (e.g., PUSCH) based on the information input from controller 101 and the demodulation result input from demodulator 110, and obtains a decoded reception bit sequence.

### [Configuration of Terminal]

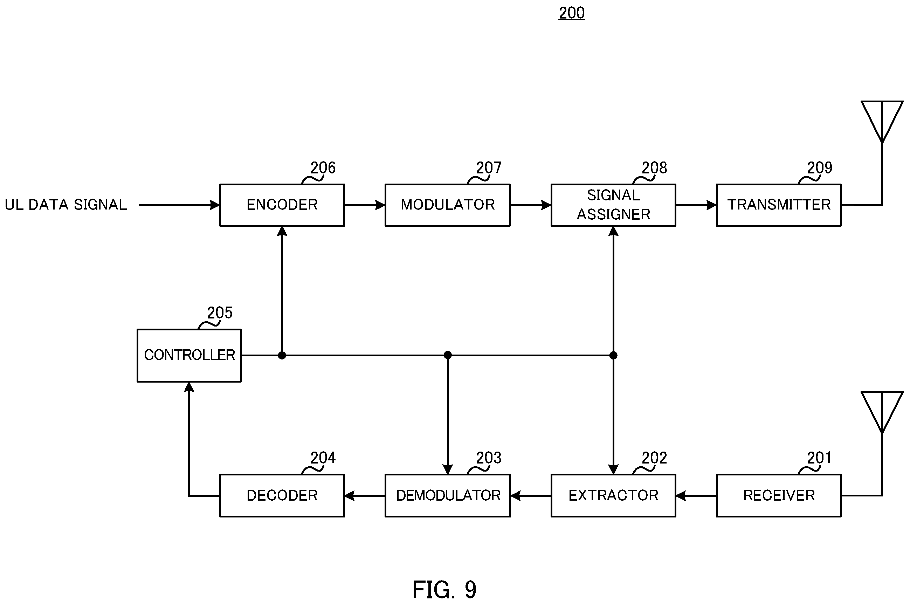

FIG. 9 is a block diagram illustrating an exemplary configuration of terminal 200 according to an embodiment of the present disclosure. For example, in FIG. 9, terminal 200 includes receiver 201, extractor 202, demodulator 203, decoder 204, controller 205, encoder 206, modulator 207, signal assigner 208, and transmitter 209.

Note that receiver 201 illustrated in FIG. 9 may be included in the receiver illustrated in FIG. 2. In addition, at least one of extractor 202, demodulator 203, decoder 204, controller 205, encoder 206, modulator 207, signal assigner 208, and transmitter 209 illustrated in FIG. 9 may be included in the transmitter illustrated in FIG. 2.

Receiver 201 receives a downlink signal (e.g., downlink data signal or downlink control information) from base station 100 via an antenna, performs RF processing such as down-conversion or A/D conversion on the received radio signal, and obtains a received signal (baseband signal). Further, when receiver 201 receives an OFDM signal, receiver 201 performs FFT processing on the received signal and converts the received signal into the frequency domain. Receiver 201 outputs the received signal to extractor 202.

Extractor 202 extracts, for example, based on information on a radio resource of downlink control information, which is input from controller 205, a radio resource portion which may include downlink control information, from the received signal input from receiver 201, and outputs the radio resource portion to demodulator 203. Further, extractor 202 extracts a radio resource portion including a downlink data signal based on information on a radio resource of the data signal input from controller 205, and outputs the radio resource portion to demodulator 203.

Demodulator 203 demodulates, for example, based on information input from controller 205, the signal input from extractor 202 (e.g., PDCCH or PDSCH), and outputs the demodulation result to decoder 204.

Decoder 204 performs, for example, error correction decoding of PDCCH or PDSCH using the demodulation result input from demodulator 203, and obtains, for example, a higher-layer control signal or downlink control information. Decoder 204 outputs the higher-layer control signal and the downlink control information to controller 205. Further, decoder 204 may generate a response signal (e.g., ACK/NACK) based on the decoding result of the PDSCH.

Controller 205 performs uplink transmission control (e.g., including identifying information related to PUSCH repetition such as the presence or absence of repetition for PUSCH transmission and the number of repetitions) in accordance with the above-described methods, based on information on PUSCH transmission obtained from the signal (e.g., higher-layer control signal or downlink control information) input from decoder 204, for example. Controller 205 outputs the determined information to, for example, encoder 206 and signal assigner 208.

Encoder 206 encodes an uplink data signal (UL data signal) or an uplink control signal based on the information input from controller 205, for example. Encoder 206 outputs the encoded bit sequence to modulator 207.

Modulator 207 modulates, for example, the encoded bit sequence input from encoder 206, and outputs the modulated signal (symbol sequence) to signal assigner 208.

Signal assigner 208 maps the signal (e.g., sequence) input from modulator 207 to a radio resource, for example, based on the information input from controller 205. Signal assigner 208 outputs, to transmitter 209, the uplink signal for which the signal has been mapped, for example.

Transmitter 209 performs generation of a transmission signal waveform, such as OFDM, on the signal input from signal assigner 208. Further, in the case of an OFDM transmission using a CP, for example, transmitter 209 performs IFFT processing on the signal and adds a CP to the signal after the IFFT. Alternatively, when transmitter 209 generates a single carrier waveform, a DFT processor may be added downstream of modulator 207 or upstream of signal assigner 208 (not illustrated), for example. Further, transmitter 209 performs, for example, RF processing such as D/A conversion and up-conversion on the transmission signal and transmits the radio signal to base station 100 via an antenna.

### (Other Embodiments)

(1) In the above-described embodiments, base station 100 may indicate to terminal 200 via SIB, the support of the repetition function for Msg.5 PUSCH repetition, or for PUSCH scheduled by DCI format 0-0 with a CRC scrambled by a C-RNTI before a UE-specific PUSCH configuration (e.g., dedicated PUSCH configuration) is completed.
(2) In the above-described embodiments, terminal 200 may request Msg.5 PUSCH repetition to base station 100, or may indicate, to base station 100, that terminal 200 has Msg.5 PUSCH repetition capability.
   Note that terminal 200 need not indicate, to base station 100, that terminal 200 has Msg.5 PUSCH repetition capability. In Embodiment 2 or 3 described above, base station 100 may transmit to terminal 200 DCI format 0-0 with a different DCI payload size or DCI format 0-0 scrambled by a different C-RNTI, regardless of the capability of terminal 200, and terminal 200 may transmit the PUSCH or PUSCH repetition corresponding to the successfully decoded DCI format 0-0.
(3) In the above-described embodiments, whether flexible symbols may be used for the PUSCH scheduled by DCI format 0-0 with a CRC scrambled by a C-RNTI may be determined by the following methods. Terminal 200 may be configured via the following explicit indication as to whether a slot containing flexible symbols, or a flexible symbol itself, configured via a higher layer parameter (e.g., tdd-UL-DL-ConfigurationCommon or tdd-UL-DL-ConfigurationDedicated), is available for PUSCH repetition.

### [Option 1: Indication by bitmap via SIB/Msg.4 PDSCH/DCI]

Base station 100 indicates, to terminal 200, a bitmap indicating the availability of slots containing flexible symbols, by including the bitmap in SIB, Msg.4 PDSCH, or DCI. Each bit of the bitmap corresponds to one or more slots composed of flexible symbols, and indicates whether the associated slot is available.

### [Option 2: Indication by 1-bit flag via SIB/Msg.4 PDSCH/DCI]

Base station 100 indicates, to terminal 200, a 1-bit flag indicating the availability of slots containing flexible symbols, by including the 1-bit flag in SIB, Msg.4 PDSCH, or DCI. For example, when the 1-bit flag is triggered, it indicates that flexible symbols are available for PUSCH repetition; when the 1-bit flag is not triggered, it indicates that flexible symbols are not available for PUSCH repetition.

### [Option 3: Indication by invalidSymbolPattern via SIB/Msg.4 PDSCH/DCI]

Base station 100 indicates, to terminal 200, information indicating symbols that are invalid for PUSCH repetition (e.g., pattern of invalid symbols) (e.g., the existing invalidSymbolPattern), by including the information in SIB, Msg.4 PDSCH, or DCI. The invalidSymbolPattern indicates, for example, whether flexible symbols are available.

The above describes examples of methods for indicating the availability of slots containing flexible symbols.

Furthermore, when the indication regarding the availability of flexible symbols is provided via DCI, in Embodiment 2 described above, a field for indicating information regarding the availability of flexible symbols may be added to DCI format 0-0 as an information field for indicating information related to PUSCH repetition.

Furthermore, the function regarding the availability of flexible symbols may be differentiated between the repetition of Msg.5 PUSCH (e.g., PUSCH scheduled by DCI format 0-0 with a CRC scrambled by a C-RNTI before a UE-specific PUSCH configuration (e.g., dedicated PUSCH configuration) is completed) and PUSCH scheduled by DCI format 0-0 with a CRC scrambled by a C-RNTI after a UE-specific PUSCH configuration (e.g., dedicated PUSCH configuration) has been completed. For example, for Msg.5 PUSCH repetition, the availability of flexible symbols may be determined by indication regarding the availability of flexible symbols. On the other hand, for the PUSCH scheduled by DCI format 0-0 with a CRC scrambled by a C-RNTI after a UE-specific PUSCH configuration has been completed, the availability of flexible symbols may be pre-defined in the specification (e.g., configuration in which flexible symbols are always available may be applied).

(4) In the above-described embodiments, whether frequency hopping is applied, and the hopping method, for the PUSCH scheduled by DCI format 0-0 with a CRC scrambled by a C-RNTI may be determined by the following methods.

### [Option a]

Intra-slot frequency hopping is not applied to PUSCH repetition scheduled by DCI format 0-0 with a CRC scrambled by a C-RNTI. In this case, the information field related to the frequency hopping flag of DCI format 0-0 may be used, for example, to indicate whether inter-slot frequency hopping is enabled or disabled.

### [Option b]

Both intra-slot frequency hopping and inter-slot frequency hopping are supported for PUSCH repetition scheduled by DCI format 0-0 with a CRC scrambled by a C-RNTI. The information field related to the frequency hopping flag of DCI format 0-0 may be used, for example, to indicate whether inter-slot frequency hopping or intra-slot frequency hopping is enabled or disabled. Furthermore, for example, information regarding which hopping method-inter-slot frequency hopping or intra-slot frequency hopping-is to be applied may be indicated to terminal 200 by being included in SIB, Msg.4 PDSCH, or DCI.

In addition, when information regarding the frequency hopping method is indicated via DCI, in Embodiment 2 described above, a field for indicating information regarding the frequency hopping method may be added to DCI format 0-0 as an information field for indicating information related to PUSCH repetition.

Moreover, the function regarding frequency hopping may be differentiated between the repetition of Msg.5 PUSCH (e.g., PUSCH scheduled by DCI format 0-0 with a CRC scrambled by a C-RNTI before a UE-specific PUSCH configuration (e.g., dedicated PUSCH configuration) is completed) and PUSCH scheduled by DCI format 0-0 with a CRC scrambled by a C-RNTI after a UE-specific PUSCH configuration (e.g., dedicated PUSCH configuration) has been completed. For example, for Msg.5 PUSCH repetition, inter-slot frequency hopping may be supported while intra-slot frequency hopping need not be supported. On the other hand, for PUSCH scheduled by DCI format 0-0 with a CRC scrambled by a C-RNTI after a UE-specific PUSCH configuration has been completed, both inter-slot frequency hopping and intra-slot frequency hopping may be supported.

(5) In the above-described embodiments, the RNTI used to scramble the CRC added to DCI is not limited to a C-RNTI; other types of RNTIs may also be used. For example, a C-RNTI may be replaced with a Temporary C-RNTI (TC-RNTI) for application.

(6) In the above-described embodiments, the DCI format is not limited to DCI format 0-0; other formats may also be used. DCI format 0-0 is sometimes referred to as, for example, a fallback DCI format. Also, in the above-described embodiments, the types, number, and sizes (number of bits) of information fields included in DCI are merely examples, and a DCI format including information fields of other types, other numbers, or other sizes may be used.

Furthermore, in each of the above-described embodiments, the channel used for uplink transmission (or the channel to which repetition is applied) is not limited to PUSCH; other channels may also be used. In addition, the type of information to be transmitted is not limited to data, and other types of information (e.g., uplink control signal (PUCCH)) may also be used. Moreover, an exemplary embodiment of the present disclosure is not limited to the uplink transmission, but may be applied to downlink transmission or sidelink transmission.

The present disclosure may be applied to, for example, communication between terminals, such as sidelink communication.

Furthermore, in the present disclosure, a downlink control channel, a downlink data channel, an uplink control channel, and an uplink data channel are not limited to PDCCH, PDSCH, PUCCH, and PUSCH, respectively, and may be control channels having other names.

Further, in the present disclosure, the RRC signaling is assumed for the higher layer signaling, but the signaling may be replaced with Medium Access Control (MAC) signaling and indication by a DCI that is physical layer signaling.

### (Complement)

Information indicating whether terminal 200 supports the functions, operations, or pieces of processing that have been indicated in the above-mentioned embodiments and complements may be transmitted (or indicated) from terminal 200 to base station 100, as capability information or a capability parameter for terminal 200, for example.

The capability information may include information elements (IEs) that individually indicate whether terminal 200 supports at least one of the functions, operations, or pieces of processing that have been described in the above-mentioned embodiments, variations, and complements. Alternatively, the capability information may include information elements that indicate whether terminal 200 supports a combination of any two or more of the functions, operations, or pieces of processing that have been described in the above-mentioned embodiments, variations, and complements.

Base station 100 may determine (or decide or assume), for example, based on the capability information received from terminal 200, the functions, operations, or processes that are supported (or not supported) by terminal 200, which is a transmission source of the capability information. Base station 100 may execute operations, processes, or control in accordance with a determination result based on the capability information. For example, base station 100 may control uplink-related processing based on the capability information received from terminal 200.

Note that in a case where terminal 200 does not entirely support the functions, operations, or pieces of processing described in the above-mentioned embodiments, variations, and complements, such an unsupported part of the functions, operations, or processes may be interpreted as a limitation in terminal 200. For example, information or a request relating to such limitation may be indicated to base station 100.

The information on the capability or the limitation of terminal 200 may be defined by standards or may be implicitly indicated to base station 100 in association with information known in base station 100 or information to be transmitted to base station 100, for example.

The embodiments, the variations, and the complements according to a non-limiting and exemplary embodiment of the present disclosure have been each described, thus far.

### (Control Signals)

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

### (Base Station)

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, the base station may be replaced with a terminal. The base station may be a relay apparatus that relays communication between a higher node and a terminal. The base station may be a roadside unit as well.

### (Uplink/Downlink/Sidelink)

The present disclosure may be applied to any of uplink, downlink and sidelink. The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### (Data Channels/Control Channels)

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### (Reference Signals)

In the present disclosure, the reference signals are signals known to both a base station and a terminal and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

### (Time Intervals)

In the present disclosure, time resource units are not limited to one or a combination of slots and symbols, and may be time resource units, such as frames, superframes, subframes, slots, time slots, subslots, minislots, or time resource units, such as symbols, Orthogonal Frequency Division Multiplexing Access (OFDM) symbols, Single Carrier-Frequency Division Multiple Access (SC-FDMA) symbols, or other time resource units. The number of symbols included in one slot is not limited to any number of symbols exemplified in the embodiment(s) described above, and may be other numbers of symbols.

### (Frequency Bands)

The present disclosure may be applied to any of a licensed band and an unlicensed band.

### (Communication)

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

### (Full duplex and SBFD)

In an embodiment of the present disclosure, the operation on the symbols of the uplink, the downlink, and the sidelink may be applied to a symbol (e.g., SBFD symbol) on which an operation or control of subband non-overlapping full duplex (SBFD) is performed. In the SBFD symbol, the frequency domain (or the frequency resource, the frequency band) is divided into a plurality of frequency domains (e.g., also referred to as subband, RB set, subband, or sub-BWP (bandwidth part)). The terminal performs transmission and reception in different directions (e.g., downlink or uplink) in units of subbands, which are divided regions. In the SBFD symbol, the terminal may perform transmission and reception in any one direction of the uplink and the downlink and may not perform transmission and reception in the other direction. On the other hand, the base station may simultaneously transmit and receive in uplink and downlink or may be capable of transmitting and receiving in uplink and downlink. In the SBFD symbol, the frequency domain available for downlink may be smaller than that in a symbol used solely for downlink transmission/reception. In addition, in the SBFD symbol, the frequency domain available for uplink may be smaller than that in a symbol used solely for uplink transmission/reception.

In addition, in the SBFD symbol, the terminal may simultaneously transmit and receive in uplink and downlink. In such a case, the frequency domain transmitted by the terminal and the frequency domain received by the terminal may be separated by a frequency spacing (also referred to as frequency gap) without being adjacent to each other.

In addition, different directions in units of subbands, which are divided regions, may include sidelink transmission and reception.

In an embodiment of the present disclosure, the operation on the symbols of the uplink, the downlink, and the sidelink may be applied to a symbol on which full duplex operation or control is performed (e.g., full duplex symbol). In a full duplex symbol, both the terminal and the base station can simultaneously transmit and receive in uplink and in downlink. In a full duplex symbol, the terminal and the base station may simultaneously transmit and receive in an available frequency domain (or frequency resource or frequency band), or may simultaneously transmit and receive in part of the frequency domain (i.e., in the frequency domain other than that part, either transmission or reception may be performed). In such a case, the frequency domain transmitted by the base station or the terminal and the frequency domain received by the base station or the terminal may be separated by a frequency spacing (also referred to as frequency gap) without being adjacent to each other. Furthermore, for example, for the purpose of interference reduction or the like, either the terminal or the base station may simultaneously transmit and receive (i.e., the other may perform either transmission or reception).

In addition, full duplex operation may be applied to an operation in which a terminal can simultaneously transmit and receive in sidelink. In addition, full duplex operation may be applied to an operation in which a terminal can simultaneously transmit and receive in sidelink and uplink or downlink.

### (Antenna Ports)

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

### <5G NR System Architecture and Protocol Stack>

3GPP has been working on the next release for the 5th generation cellular technology (simply called "5G"), including the development of a new radio access technology (NR) operating in frequencies ranging up to 100 GHz. The first version of the 5G standard was completed at the end of 2017, which allows proceeding to 5G NR standard-compliant trials and commercial deployments of terminals (e.g., smartphones).

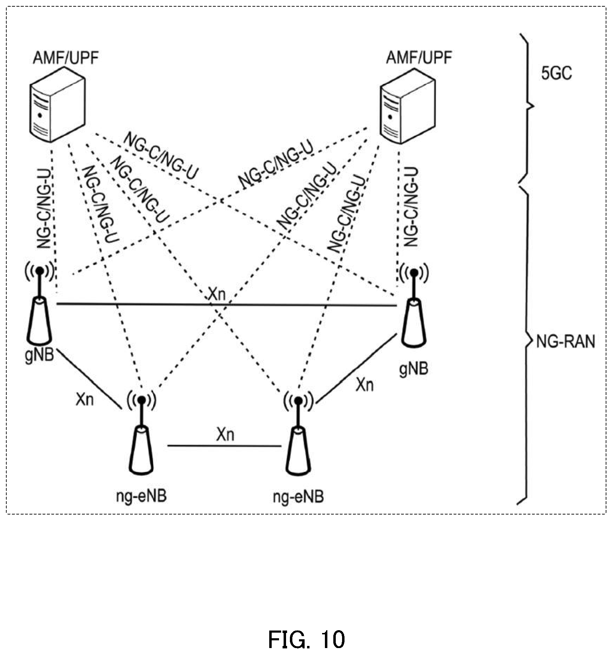

For example, the overall system architecture assumes an NG-RAN (Next Generation-Radio Access Network) that includes gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g., a particular core entity performing the AMF) by means of the NG-C interface and to the UPF (User Plane Function) (e.g., a particular core entity performing the UPF) by means of the NG-U interface. The NG-RAN architecture is illustrated in FIG. 10 (see e.g., 3GPP TS 38.300 v15.6.0, section 4).

The user plane protocol stack for NR (see e.g., 3GPP TS 38.300, section 4.4.1) includes the PDCP (Packet Data Convergence Protocol, see clause 6.4 of TS 38.300), RLC (Radio Link Control, see clause 6.3 of TS 38.300) and MAC (Medium Access Control, see clause 6.2 of TS 38.300) sublayers, which are terminated in the gNB on the network side. Additionally, a new Access Stratum (AS) sublayer (SDAP, Service Data Adaptation Protocol) is introduced above the PDCP (see e.g., clause 6.5 of 3GPP TS 38.300). A control plane protocol stack is also defined for NR (see for instance TS 38.300, section 4.4.2). An overview of the Layer 2 functions is given in clause 6 of TS 38.300. The functions of the PDCP, RLC, and MAC sublayers are listed respectively in clauses 6.4, 6.3, and 6.2 of TS 38.300. The functions of the RRC layer are listed in clause 7 of TS 38.300.

For instance, the Medium Access Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. The physical layer also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. Examples of the physical channel include a Physical Random Access Channel (PRACH), a Physical Uplink Shared Channel (PUSCH), and a Physical Uplink Control Channel (PUCCH) as uplink physical channels, and a Physical Downlink Shared Channel (PDSCH), a Physical Downlink Control Channel (PDCCH), and a Physical Broadcast Channel (PBCH) as downlink physical channels.

Use cases/deployment scenarios for NR could include enhanced mobile broadband (eMBB), ultra-reliable low-latency communications (URLLC), and massive machine type communication (mMTC), which have diverse requirements in terms of data rates, latency, and coverage. For example, eMBB is expected to support peak data rates (20 Gbps for downlink and 10 Gbps for uplink) and user-experienced data rates on the order of three times what is offered by IMT-Advanced. On the other hand, in case of URLLC, the tighter requirements are put on ultra-low latency (0.5 ms for UL and DL each for user plane latency) and high reliability (1-10-5 within 1 ms). Finally, mMTC may preferably require high connection density (1,000,000 devices/km² in an urban environment), large coverage in harsh environments, and extremely long-life battery for low cost devices (15 years).

Therefore, the OFDM numerology (e.g., subcarrier spacing, OFDM symbol duration, cyclic prefix (CP) duration, and number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacings of 15 kHz, 30 kHz, and 60 kHz... are being considered at the moment. The symbol duration Tu and the subcarrier spacing Δf are directly related through the formula Δf = 1/Tu. In a similar manner as in LTE systems, the term "resource element" can be used to denote a minimum resource unit being composed of one subcarrier for the length of one OFDM/SC-FDMA symbol.

In the new radio system 5G-NR for each numerology and each carrier, resource grids of subcarriers and OFDM symbols are defined respectively for uplink and downlink. Each element in the resource grids is called a resource element and is identified based on the frequency index in the frequency domain and the symbol position in the time domain (see 3GPP TS 38.211 v15.6.0).

### <Functional Split between NG-RAN and 5GC in 5G NR>

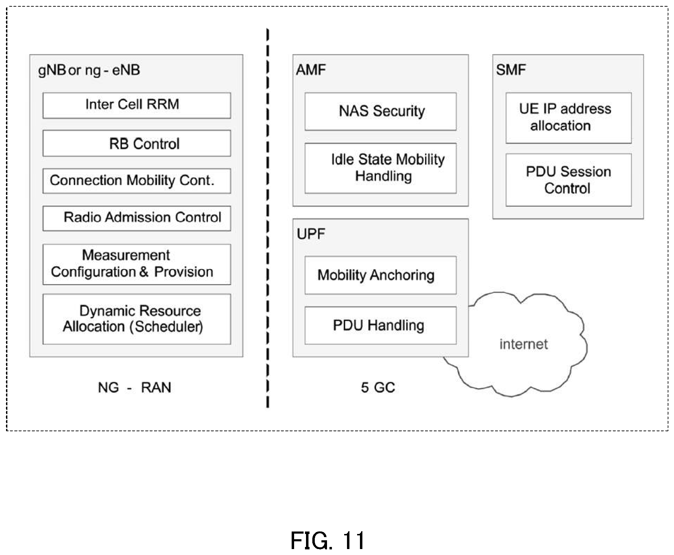

FIG. 11 illustrates the functional split between the NG-RAN and the 5GC. A logical node of the NG-RAN is gNB or ng-eNB. The 5GC includes logical nodes AMF, UPF, and SMF.

For example, gNB and ng-eNB hosts the following main functions:
- Radio Resource Management functions such as Radio Bearer Control, Radio Admission Control, Connection Mobility Control, and dynamic allocation (scheduling) of both uplink and downlink resources to a UE;
- IP header compression, encryption, and integrity protection of data;
- Selection of an AMF during UE attachment in such a case when no routing to an AMF can be determined from the information provided by the UE;
- Routing user plane data towards the UPF;
- Routing control plane information towards the AMF;
- Connection setup and release;
- Scheduling and transmission of paging messages;
- Scheduling and transmission of system broadcast information (originated from the AMF or an operation management maintenance function (OAM: Operation, Admission, Maintenance));
- Measurement and measurement reporting configuration for mobility and scheduling;
- Transport level packet marking in the uplink;
- Session management;
- Support of network slicing;
- QoS flow management and mapping to data radio bearers;
- Support of UEs in the RRC_INACTIVE state;
- Distribution function for NAS messages;
- Radio access network sharing;
- Dual connectivity; and
- Tight interworking between NR and E-UTRA.

The Access and Mobility Management Function (AMF) hosts the following main functions:
- Function of Non-Access Stratum (NAS) signaling termination;
- NAS signaling security;
- Access Stratum (AS) security control;
- Inter-Core Network (CN) node signaling for mobility between 3GPP access networks;
- Idle mode UE reachability (including control and execution of paging retransmission);
- Registration area management;
- Support of intra-system and inter-system mobility;
- Access authentication;
- Access authorization including check of roaming rights;
- Mobility management control (subscription and policies);
- Support of network slicing; and
- Session Management Function (SMF) selection.

In addition, the User Plane Function (UPF) hosts the following main functions:
- Anchor Point for intra-/inter-RAT mobility (when applicable);
- External Protocol Data Unit (PDU) session point for interconnection to a data network;
- Packet routing and forwarding;
- Packet inspection and a user plane part of Policy rule enforcement;
- Traffic usage reporting;
- Uplink classifier to support routing traffic flows to a data network;
- Branching point to support multi-homed PDU session;
- QoS handling for user plane (e.g., packet filtering, gating, UL/DL rate enforcement);
- Uplink traffic verification (SDF to QoS flow mapping); and
- Function of downlink packet buffering and downlink data notification triggering.

Finally, the Session Management Function (SMF) hosts the following main functions:
- Session management;
- UE IP address allocation and management;
- Selection and control of UPF;
- Configuration function for traffic steering at the User Plane Function (UPF) to route traffic to a proper destination;
- Control part of policy enforcement and QoS; and
- Downlink data notification.

### <RRC Connection Setup and Reconfiguration Procedure>

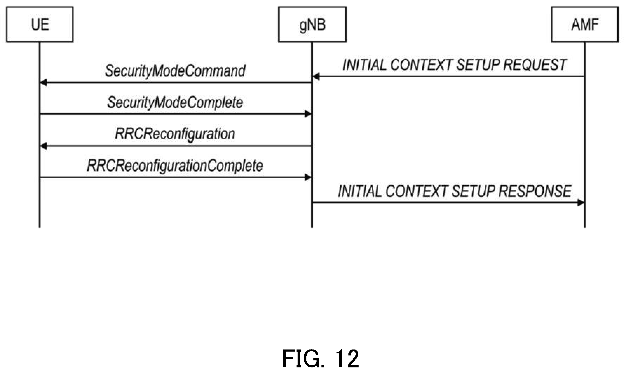

FIG. 12 illustrates some interactions between a UE, gNB, and AMF (a 5GC Entity) performed in the context of a transition of the UE from RRC_IDLE to RRC_CONNECTED for the NAS part (see TS 38 300 v15.6.0).

The RRC is higher layer signaling (protocol) used to configure the UE and gNB. With this transition, the AMF prepares UE context data (which includes, e.g., a PDU session context, security key, UE Radio Capability, UE Security Capabilities, and the like) and sends it to the gNB with an INITIAL CONTEXT SETUP REQUEST. Then, the gNB activates the AS security with the UE. This activation is performed by the gNB transmitting to the UE a SecurityModeCommand message and by the UE responding to the gNB with the SecurityModeComplete message. Afterwards, the gNB performs the reconfiguration to setup the Signaling Radio Bearer 2 (SRB2) and Data Radio Bearer(s) (DRB(s)) by means of transmitting to the UE the RRCReconfiguration message and, in response, receiving by the gNB the RRCReconfigurationComplete from the UE. For a signaling-only connection, the steps relating to the RRCReconfiguration are skipped since SRB2 and DRBs are not set up. Finally, the gNB indicates the AMF that the setup procedure is completed with INITIAL CONTEXT SETUP RESPONSE.

Thus, the present disclosure provides a 5th Generation Core (5GC) entity (e.g., AMF, SMF, or the like) including control circuitry, which, in operation, establishes a Next Generation (NG) connection with a gNodeB, and a transmitter, which in operation, transmits an initial context setup message to the gNodeB via the NG connection such that a signaling radio bearer between the gNodeB and a User Equipment (UE) is set up. Specifically, the gNodeB transmits Radio Resource Control (RRC) signaling including a resource allocation configuration Information Element (IE) to the UE via the signaling radio bearer. Then, the UE performs an uplink transmission or a downlink reception based on the resource allocation configuration.

### <Usage Scenarios of IMT for 2020 and beyond>

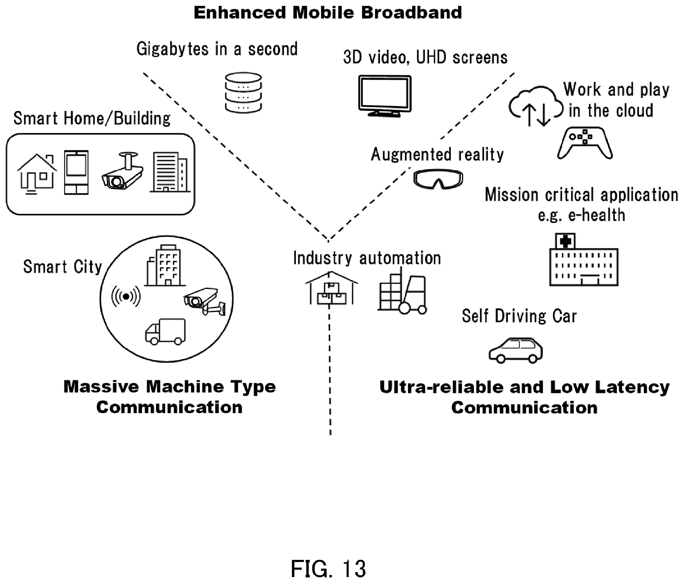

FIG. 13 illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications (mMTC). FIG. 13 illustrates some examples of envisioned usage scenarios for IMT for 2020 and beyond (see e.g., ITU-R M.2083 FIG. 2).

The URLLC use case has stringent requirements for capabilities such as throughput, latency and availability. The URLLC use case has been envisioned as one of the enablers for future vertical applications such as wireless control of industrial manufacturing or production processes, remote medical surgery, distribution automation in a smart grid, transportation safety. Ultra-reliability for URLLC is to be supported by identifying the techniques to meet the requirements set by TR 38.913. For NR URLLC in Release 15, key requirements include a target user plane latency of 0.5 ms for UL (uplink) and 0.5 ms for DL (downlink). The general URLLC requirement for one transmission of a packet is a block error rate (BLER) of 1E-5 for a packet size of 32 bytes with a user plane latency of 1 ms.

From the physical layer perspective, reliability can be improved in a number of possible ways. The current scope for improving the reliability involves defining separate CQI tables for URLLC, more compact DCI formats, repetition of PDCCH, or the like. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency/higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, for example, for URLLC and mMTC, is high reliability or ultra-reliability. Several mechanisms can improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability improvement in general, regardless of particular communication scenarios.

For NR URLLC, further use cases with tighter requirements have been envisioned such as factory automation, transport industry and electrical power distribution. The tighter requirements are higher reliability (up to 10-6 level), higher availability, packet sizes of up to 256 bytes, time synchronization up to the extent of a few µs (where the value can be one or a few µs depending on frequency range and short latency on the order of 0.5 to 1 ms (in particular a target user plane latency of 0.5 ms), depending on the use cases).

Moreover, for NR URLLC, several technology enhancements from physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also PUSCH enhancements related to mini-slot level hopping and retransmission/repetition enhancements are possible. The term "mini-slot" refers to a Transmission Time Interval (TTI) including a smaller number of symbols than a slot (a slot comprising fourteen symbols).

### <QoS Control>

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU sessions. For each UE, per PDU session, the NG-RAN establishes at least one Data Radio Bearer (DRB), e.g., as illustrated above with reference to FIG. 12. Further, additional DRB(s) for QoS flow(s) of that PDU session can be subsequently configured (it is up to NG-RAN when to do so). The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

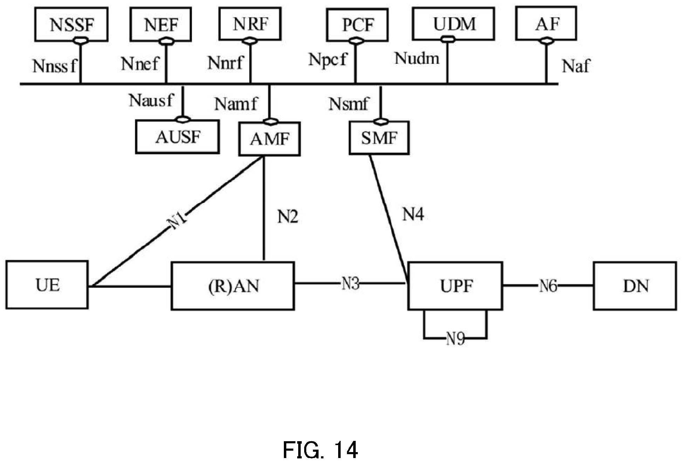

FIG. 14 illustrates a 5G NR non-roaming reference architecture (see TS 23.501 v16.1.0, section 4.23). An Application Function (AF) (e.g., external application server hosting 5G services, exemplarily illustrated in FIG. 13) interacts with the 3GPP Core Network in order to provide services, for example to support application influencing on traffic routing, accessing Network Exposure Function (NEF) or interacting with the policy framework for policy control (e.g., QoS control) (see Policy Control Function, PCF). Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

FIG. 14 illustrates further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN, e.g., operator services, Internet access, or third party services). All of or a part of the core network functions and the application services may be deployed and running on cloud computing environments.

In the present disclosure, thus, an application server (e.g., AF of the 5G architecture), is provided that includes: a transmitter, which in operation, transmits a request containing a QoS requirement for at least one of URLLC, eMMB and mMTC services to at least one of functions (such as NEF, AMF, SMF, PCF, and UPF) of the 5GC to establish a PDU session including a radio bearer between a gNodeB and a UE in accordance with the QoS requirement; and control circuitry, which, in operation, performs the services using the established PDU session.

In the description of the present disclosure, the term ending with a suffix, such as "-er" "-or" or "-ar" may be interchangeably replaced with another term, such as "circuit (circuitry)," "device," "unit," or "module."

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI herein may be referred to as an IC, a system LSI, a super LSI, or an ultra LSI depending on a difference in the degree of integration.

However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing.

If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. The communication apparatus may comprise a transceiver and processing/control circuitry. The transceiver may comprise and/or function as a receiver and a transmitter. The transceiver, as the transmitter and receiver, may include an RF (radio frequency) module and one or more antennas. The RF module may include an amplifier, an RF modulator/demodulator, or the like. Some non-limiting examples of such a communication apparatus include a phone (e.g., cellular (cell) phone, smartphone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)."

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as, e.g., a base station, an access point, and any other apparatus, device or system that communicates with or controls apparatuses such as those in the above non-limiting examples.

A terminal according to an embodiment of the present disclosure includes: reception circuitry, which, in operation, receives downlink control information scheduling an uplink signal independently of a terminal-specific configuration, the downlink control information including information scrambled by a terminal-specific identifier; and transmission circuitry, which, in operation, performs repetition transmission of the uplink signal based on information related to the repetition transmission of the uplink signal, the information related to the repetition transmission being identified based on the downlink control information.

In the embodiment of the present disclosure, the downlink control information includes a field for indicating information different from the information related to the repetition transmission, and the information related to the repetition transmission is assigned to at least a part of the field.

In the embodiment of the present disclosure, the downlink control information is a first DCI format 0-0 including a field for indicating the information related to the repetition transmission, and a payload size of the first DCI format 0-0 is different from a payload size of a second DCI format 0-0 not including the field for indicating the information related to the repetition transmission.

In the embodiment of the present disclosure, the reception circuitry performs blind decoding for a plurality of payload sizes respectively corresponding to the first DCI format 0-0 and the second DCI format 0-0.

In the embodiment of the present disclosure, the terminal is a terminal that requests the repetition transmission of the uplink signal, a terminal that has indicated, to a base station, that the terminal has a capability of the repetition transmission of the uplink signal, or a terminal that has the capability of the repetition transmission of the uplink signal.

In the embodiment of the present disclosure, the reception circuitry performs the blind decoding for the plurality of payload sizes until a terminal-specific search space is assigned.

In the embodiment of the present disclosure, the identifier is a Radio Network Temporary Identifier (RNTI), the downlink control information is a first DCI format 0-0 for indicating the information related to the repetition transmission, and the RNTI corresponding to the first DCI format 0-0 is different from the RNTI corresponding to a second DCI format 0-0 that does not indicate the information related to the repetition transmission.

In the embodiment of the present disclosure, the reception circuitry performs blind decoding for a plurality of RNTIs respectively corresponding to the first DCI format 0-0 and the second DCI format 0-0.

In the embodiment of the present disclosure, the terminal is a terminal that requests the repetition transmission of the uplink signal, a terminal that has indicated, to a base station, that the terminal has a capability of the repetition transmission of the uplink signal, or a terminal that has the capability of the repetition transmission of the uplink signal.

In the embodiment of the present disclosure, the reception circuitry performs the blind decoding for the plurality of RNTIs until a terminal-specific search space is assigned.

In the embodiment of the present disclosure, a function for the repetition transmission is identical between the uplink signal scheduled by the downlink control information received by the terminal before completion of the terminal-specific configuration and the uplink signal scheduled by the downlink control information received by the terminal after completion of the terminal-specific configuration.

In the embodiment of the present disclosure, a function for the repetition transmission is different between the uplink signal scheduled by the downlink control information received by the terminal before completion of the terminal-specific configuration and the uplink signal scheduled by the downlink control information received by the terminal after completion of the terminal-specific configuration.

A base station according to an embodiment of the present disclosure includes: transmission circuitry, which, in operation, transmits downlink control information scheduling an uplink signal independently of a terminal-specific configuration, the downlink control information including information scrambled by a terminal-specific identifier; and reception circuitry, which, in operation, receives repetition transmission of the uplink signal based on information related to the repetition transmission of the uplink signal, the information related to the repetition transmission being identified based on the downlink control information.

In a communication method according to an embodiment of the present disclosure, a terminal receives downlink control information scheduling an uplink signal independently of a terminal-specific configuration, the downlink control information including information scrambled by a terminal-specific identifier, and performs repetition transmission of the uplink signal based on information related to the repetition transmission of the uplink signal, the information related to the repetition transmission being identified based on the downlink control information.

In a communication method according to an embodiment of the present disclosure, a base station transmits downlink control information scheduling an uplink signal independently of a terminal-specific configuration, the downlink control information including information scrambled by a terminal-specific identifier, and receives repetition transmission of the uplink signal based on information related to the repetition transmission of the uplink signal, the information related to the repetition transmission being identified based on the downlink control information.

The disclosure of Japanese Patent Application No. 2023-201637, filed on November 29, 2023, including the specification, drawings and abstract, is incorporated herein by reference in its entirety.

### Industrial Applicability

An exemplary embodiment of the present disclosure is useful for radio communication systems.

### Reference Signs List

100 Base station
101, 205 Controller
102 Higher-layer control signal generator
103 Downlink control information generator
104, 206 Encoder
105, 207 Modulator
106, 208 Signal assigner
107, 209 Transmitter
108, 201 Receiver
109, 202 Extractor
110, 203 Demodulator
111, 204 Decoder
200 Terminal

## Claims

1. A terminal, comprising:
reception circuitry, which, in operation, receives downlink control information scheduling an uplink signal independently of a terminal-specific configuration, the downlink control information including information scrambled by a terminal-specific identifier; and
transmission circuitry, which, in operation, performs repetition transmission of the uplink signal based on information related to the repetition transmission of the uplink signal, the information related to the repetition transmission being identified based on the downlink control information.

2. The terminal according to claim 1, wherein
the downlink control information includes a field for indicating information different from the information related to the repetition transmission, and
the information related to the repetition transmission is assigned to at least a part of the field.

3. The terminal according to claim 1, wherein
the downlink control information is a first DCI format 0-0 including a field for indicating the information related to the repetition transmission, and
a payload size of the first DCI format 0-0 is different from a payload size of a second DCI format 0-0 not including the field for indicating the information related to the repetition transmission.

4. The terminal according to claim 3, wherein
the reception circuitry performs blind decoding for a plurality of payload sizes respectively corresponding to the first DCI format 0-0 and the second DCI format 0-0.

5. The terminal according to claim 4, wherein
the terminal is a terminal that requests the repetition transmission of the uplink signal, a terminal that has indicated, to a base station, that the terminal has a capability of the repetition transmission of the uplink signal, or a terminal that has the capability of the repetition transmission of the uplink signal.

6. The terminal according to claim 4, wherein
the reception circuitry performs the blind decoding for the plurality of payload sizes until a terminal-specific search space is assigned.

7. The terminal according to claim 1, wherein
the identifier is a Radio Network Temporary Identifier (RNTI),
the downlink control information is a first DCI format 0-0 for indicating the information related to the repetition transmission, and
the RNTI corresponding to the first DCI format 0-0 is different from the RNTI corresponding to a second DCI format 0-0 that does not indicate the information related to the repetition transmission.

8. The terminal according to claim 7, wherein
the reception circuitry performs blind decoding for a plurality of RNTIs respectively corresponding to the first DCI format 0-0 and the second DCI format 0-0.

9. The terminal according to claim 8, wherein
the terminal is a terminal that requests the repetition transmission of the uplink signal, a terminal that has indicated, to a base station, that the terminal has a capability of the repetition transmission of the uplink signal, or a terminal that has the capability of the repetition transmission of the uplink signal.

10. The terminal according to claim 8, wherein
the reception circuitry performs the blind decoding for the plurality of RNTIs until a terminal-specific search space is assigned.

11. The terminal according to claim 1, wherein
a function for the repetition transmission is identical between the uplink signal scheduled by the downlink control information received by the terminal before completion of the terminal-specific configuration and the uplink signal scheduled by the downlink control information received by the terminal after completion of the terminal-specific configuration.

12. The terminal according to claim 1, wherein
a function for the repetition transmission is different between the uplink signal scheduled by the downlink control information received by the terminal before completion of the terminal-specific configuration and the uplink signal scheduled by the downlink control information received by the terminal after completion of the terminal-specific configuration.

13. A base station, comprising:
transmission circuitry, which, in operation, transmits downlink control information scheduling an uplink signal independently of a terminal-specific configuration, the downlink control information including information scrambled by a terminal-specific identifier; and
reception circuitry, which, in operation, receives repetition transmission of the uplink signal based on information related to the repetition transmission of the uplink signal, the information related to the repetition transmission being identified based on the downlink control information.

14. A communication method, comprising:
receiving, by a terminal, downlink control information scheduling an uplink signal independently of a terminal-specific configuration, the downlink control information including information scrambled by a terminal-specific identifier; and
performing, by the terminal, repetition transmission of the uplink signal based on information related to the repetition transmission of the uplink signal, the information related to the repetition transmission being identified based on the downlink control information.

15. A communication method, comprising:
transmitting, by a base station, downlink control information scheduling an uplink signal independently of a terminal-specific configuration, the downlink control information including information scrambled by a terminal-specific identifier; and
receiving, by the base station, repetition transmission of the uplink signal based on information related to the repetition transmission of the uplink signal, the information related to the repetition transmission being identified based on the downlink control information.
